# EUROPEAN PATENT SPECIFICATION

(11) **EP 4 043 253 B1**
(45) Date of publication and mention of the grant of the patent: **20.12.2023**
(21) Application number: 22153947.1
(22) Date of filing: 28.01.2022
(51) Int. Cl.: B60H 1/00

(54) **THERMAL MANAGEMENT SYSTEM, METHOD FOR CONTROLLING THERMAL MANAGEMENT SYSTEM, AND ELECTRIC VEHICLE**
WÄRMEVERWALTUNGSSYSTEM, VERFAHREN ZUR STEUERUNG EINES WÄRMEVERWALTUNGSSYSTEMS UND ELEKTROFAHRZEUG
SYSTÈME DE GESTION THERMIQUE, PROCÉDÉ DE COMMANDE D'UN SYSTÈME DE GESTION THERMIQUE, ET VÉHICULE ÉLECTRIQUE

(30) Priority: 05.02.2021 CN 202110164688
(43) Date of publication of application: 17.08.2022
(73) Proprietor: Huawei Digital Power Technologies Co., Ltd., Shenzhen, Guangdong 518043 (CN)
(72) Inventor: YU, Shuliang, Shenzhen, 518129 (CN); WANG, Yanzhong, Shenzhen, 518129 (CN); CHEN, Jiongde, Shenzhen, 518129 (CN); WANG, Shaohua, Shenzhen, 518129 (CN)
(74) Representative: Gill Jennings & Every LLP

(56) References cited:
- DE-A1-102019 100 096
- US-A1- 2020 276 879
- US-A1- 2020 353 795

## Description

### TECHNICAL FIELD

This invention relates to the field of thermal management technologies, and in particular, to a thermal management system, a method for controlling a thermal management system, and an electric vehicle.

### BACKGROUND

In a conventional technology, there is a heating technology based on heating by a motor. Specifically, when heating is required, the motor is enabled to operate to heat a motor coolant, and the motor coolant transfers heat to a to-be-heated space or device, to heat the space or device. However, not all of heat generated by the motor is transferred to the motor coolant, but a part of the heat is dissipated to a surrounding environment of the motor through a motor housing or the like, thereby resulting in relatively low thermal efficiency of this heating mode.

A thermal management system for an electric vehicle is used as an example for description below. For example, a battery has a relatively low temperature in winter. In this case, the battery is usually heated. For a technology for heating the battery, there is a manner in which heat is generated through stalling or low-efficiency operating of a motor, to increase a temperature of a motor coolant, and then the battery is heated by the motor coolant. However, a part of the heat generated by the motor is dissipated to an environment through motor and gear box housings, and only a part of the heat is transferred to the motor coolant. In particular, a larger difference between a motor temperature and an ambient temperature results in greater heat loss caused by dissipation of the heat generated by the motor to the environment. As a result, utilization of the heat generated by the motor is relatively low.

In addition to the battery, a passenger compartment also has a heating requirement. Similarly, if the passenger compartment is heated based on heating by the motor, utilization of heat generated by the motor is also relatively low.

US 2020/353795 A1 describes a heat pump system for electric vehicle and control method thereof. DE 10 2019 100096 A1 describes an air conditioning and battery cooling arrangement and for operating an air conditioning and battery cooling arrangement.

### SUMMARY

In view of this, a main objective of this invention is to provide a thermal management system capable of relatively efficiently using heat generated by a motor, a method for controlling a thermal management system, and an electric vehicle.

To achieve the foregoing objective, a first aspect of this invention provides a thermal management system, including a refrigerant loop and a motor coolant loop. The refrigerant loop and the motor coolant loop jointly include a low pressure chiller. The low pressure chiller is configured to enable a refrigerant in the refrigerant loop to absorb heat from a motor coolant in the motor coolant loop, to heat a target temperature-controlled space and/or a target temperature-controlled device.

With the foregoing structure, the low pressure chiller enables the refrigerant in the refrigerant loop to absorb the heat from the motor coolant through evaporation, that is, the heat from the motor coolant is absorbed by a heat pump to heat the target temperature-controlled space and/or the target temperature-controlled device. Therefore, compared with a manner of directly heating the target temperature-controlled device or air in the target temperature-controlled space by the motor coolant, the target temperature-controlled space and/or the target temperature-controlled device can be heated to a required temperature even if a temperature of the motor coolant is relatively low, that is, the temperature of the motor coolant may be relatively low on a basis that a required heating effect can be achieved, so that a difference between the temperature of the motor coolant and an ambient temperature is relatively small. In this way, heat loss caused by dissipation of heat from a motor to a surrounding environment can be reduced, thereby improving utilization of the heat from the motor.

In a possible implementation of the first aspect of this invention, the refrigerant loop further includes:
an outer heat exchanger, configured to enable heat exchange between the refrigerant and air outside the target temperature-controlled space, and connected in parallel to the low pressure chiller; and a 3-way valve, configured to adjust a refrigerant flow ratio between the low pressure chiller and the outer heat exchanger.

With the foregoing structure, heat is generated both in a manner of providing heat by the motor and a manner of providing heat by external air, and the 3-way valve adjusts a heat supply amount shared by each of the motor and the external air. For example, when the ambient temperature is relatively high, the heat provided by the motor is reduced, thereby reducing energy consumption (because heat conversion efficiency of the motor is relatively low); or when the ambient temperature is relatively low (lower than -10°C), or when the outer heat exchanger is frosted after long-term use, a flow rate of the low pressure chiller is increased, to increase a heat supply amount shared by the motor, thereby avoiding an insufficient heating amount.

In a possible implementation of the first aspect of this invention, the 3-way valve includes: a first electronic expansion valve, connected in series to the low pressure chiller, and configured to adjust a refrigerant flow rate of the low pressure chiller; and a second electronic expansion valve, connected in series to the outer heat exchanger, and configured to adjust a refrigerant flow rate of the outer heat exchanger.

With the foregoing structure, the 3-way valve is constituted by the electronic expansion valves. This has lower costs than, for example, a manner of using a three-way valve with an adjustable flow rate.

In a possible implementation of the first aspect of this invention, the refrigerant loop further includes:
a heat exchanger for the target temperature-controlled device, configured to enable heat exchange between the refrigerant and a heat exchange working medium for adjusting a temperature of the target temperature-controlled device; an inner heat exchanger, configured to enable heat exchange between the refrigerant and air in the target temperature-controlled space; a third electronic expansion valve, connected in series to the heat exchanger for the target temperature-controlled device, and configured to control a refrigerant flow rate of the heat exchanger for the target temperature-controlled device; and a fourth electronic expansion valve, connected in series to the inner heat exchanger, and configured to control a refrigerant flow rate of the inner heat exchanger. The first electronic expansion valve, the second electronic expansion valve, the third electronic expansion valve, and the fourth electronic expansion valve may be integrated.

With the foregoing structure, the plurality of electronic expansion valves are integrated, thereby reducing manufacturing costs.

According to the invention, the refrigerant loop further includes: a compressor that has a refrigerant outlet and a refrigerant inlet; a first outlet branch, configured to connect the refrigerant outlet to the low pressure chiller and/or the outer heat exchanger, where the outer heat exchanger is configured to enable heat exchange between the refrigerant and air outside the target temperature-controlled space; a second outlet branch, configured to connect the refrigerant outlet to the inner heat exchanger and/or the heat exchanger for the target temperature-controlled device, where the inner heat exchanger is configured to enable heat exchange between the refrigerant and air in the target temperature-controlled space, and the heat exchanger for the target temperature-controlled device is configured to enable heat exchange between the refrigerant and the heat exchange working medium for adjusting the temperature of the target temperature-controlled device; a first inlet branch, configured to connect the refrigerant inlet to the inner heat exchanger and/or the heat exchanger for the target temperature-controlled device; and a second inlet branch, configured to connect the refrigerant inlet to the low pressure chiller and/or the outer heat exchanger. The first outlet branch, the second outlet branch, the first inlet branch, and the second inlet branch respectively have a first stop valve, a second stop valve, a third stop valve, and a fourth stop valve for controlling opening and closing of the branch. The first stop valve, the second stop valve, the third stop valve, and the fourth stop valve may be integrated.

With the foregoing structure, the branches are controlled by the stop valves. This can reduce costs compared with a manner of using a three-way valve or the like. In addition, functions of the four stop valves are integrated into one integrated valve. This reduces a quantity of external pipelines connected between the valves, and the plurality of valves share a controller, thereby reducing manufacturing costs.

In a possible implementation of the first aspect of this invention, the thermal management system further includes a heat exchange circulation loop for the target temperature-controlled device. The heat exchange circulation loop for the target temperature-controlled device and the refrigerant loop jointly include the heat exchanger for the target temperature-controlled device. The heat exchanger for the target temperature-controlled device is configured to enable heat exchange between the refrigerant and a heat exchange working medium in the heat exchange circulation loop for the target temperature-controlled device.

In a possible implementation of the first aspect of this invention, the motor coolant is the same as the heat exchange working medium in the heat exchange circulation loop for the target temperature-controlled device. The motor coolant loop and the heat exchange circulation loop for the target temperature-controlled device jointly include a 4-way valve. The 4-way valve is configured to switch the motor coolant loop and the heat exchange circulation loop for the target temperature-controlled device between a series connection state and a mutual independence state.

With the foregoing structure, the motor coolant loop may be connected in series to the heat exchange circulation loop for the target temperature-controlled device. Therefore, for example, when the motor has a relatively large amount of residual heat, the target temperature-controlled device may be heated directly by the motor coolant, without running a heat pump unit, thereby reducing energy consumption.

In a possible implementation of the first aspect of this invention, the motor coolant loop includes a radiator, and the radiator is configured to dissipate heat from the motor coolant to the air outside the target temperature-controlled space.

With the foregoing structure, for example, when the temperature of the target temperature-controlled device is relatively high and the ambient temperature is relatively low, the heat exchange circulation loop for the target temperature-controlled device and the motor coolant loop may be connected in series and connected to the radiator, to cool the target temperature-controlled device and the motor by using the radiator. In addition, because the radiator in the motor coolant loop can be shared by the heat exchange circulation loop for the target temperature-controlled device, manufacturing costs can be reduced compared with a case in which radiators are separately disposed in the two loops.

In a possible implementation of the first aspect of this invention, the thermal management system is applied to an electric vehicle, the target temperature-controlled space is a passenger compartment, and the target temperature-controlled device is a battery.

In addition, to achieve the foregoing objective, a second aspect of this invention provides an electric vehicle. The electric vehicle includes the thermal management system of any one of the structures in the first aspect.

In addition, to achieve the foregoing objective, a third aspect of this invention. provides a method for controlling a thermal management system. The thermal management system includes a refrigerant loop and a motor coolant loop. The refrigerant loop and the motor coolant loop jointly include a low pressure chiller. The low pressure chiller is configured to enable a refrigerant in the refrigerant loop to absorb heat from a motor coolant in the motor coolant loop through evaporation, to heat a target temperature-controlled device. When a temperature of the target temperature-controlled device is less than a first preset value, the target temperature-controlled device is heated by the heat absorbed by the refrigerant from the motor coolant through evaporation.

With the foregoing method, when the temperature of the target temperature-controlled device is less than the first preset value, in the low pressure chiller, the refrigerant in the refrigerant loop is enabled to absorb the heat from the motor coolant through evaporation, that is, the heat from the motor coolant is absorbed by a heat pump to heat the target temperature-controlled device. Therefore, the target temperature-controlled device can reach a required heating temperature even if a temperature of the motor coolant is relatively low, that is, the temperature of the motor coolant may be relatively low on a basis that a required heating effect can be achieved, so that a difference between the temperature of the motor coolant and an ambient temperature is relatively small. In this way, heat loss caused by dissipation of heat from a motor to a surrounding environment can be reduced, thereby improving utilization of the heat from the motor.

In a possible implementation of the third aspect, the thermal management system further includes a heat exchange circulation loop for the target temperature-controlled device. The heat exchange circulation loop for the target temperature-controlled device and the refrigerant loop jointly include a heat exchanger for the target temperature-controlled device. The heat exchanger for the target temperature-controlled device is configured to enable heat exchange between the refrigerant and a heat exchange working medium in the heat exchange circulation loop for the target temperature-controlled device. The motor coolant is the same as the heat exchange working medium in the heat exchange circulation loop for the target temperature-controlled device. The motor coolant loop and the heat exchange circulation loop for the target temperature-controlled device jointly include a 4-way valve. The 4-way valve is configured to switch the motor coolant loop and the heat exchange circulation loop for the target temperature-controlled device between a series connection state and a mutual independence state. When a difference between a motor outlet coolant temperature and the temperature of the target temperature-controlled device is greater than a first preset difference, the 4-way valve is controlled to connect the motor coolant loop in series to the heat exchange circulation loop for the target temperature-controlled device, so that the target temperature-controlled device is heated by heat from the motor coolant. The motor outlet coolant temperature is a temperature of the motor coolant when the motor coolant flows out of the motor side.

In this way, when the difference between the motor outlet coolant temperature and the temperature of the target temperature-controlled device is greater than the first preset difference, that is, the motor outlet coolant temperature is much higher than the temperature of the target temperature-controlled device, for example, the motor has a relatively large amount of residual heat, a relatively good heating effect can be achieved by directly heating the target temperature-controlled device by using the motor coolant, without using the refrigerant as an intermediate heat exchange working medium, and without starting the refrigerant loop, thereby reducing energy consumption.

In a possible implementation of the third aspect, the thermal management system further includes a heat exchange circulation loop for the target temperature-controlled device. The heat exchange circulation loop for the target temperature-controlled device and the refrigerant loop jointly include a heat exchanger for the target temperature-controlled device. The heat exchanger for the target temperature-controlled device is configured to enable heat exchange between the refrigerant and a heat exchange working medium in the heat exchange circulation loop for the target temperature-controlled device. The motor coolant is the same as the heat exchange working medium in the heat exchange circulation loop for the target temperature-controlled device. The motor coolant loop and the heat exchange circulation loop for the target temperature-controlled device jointly include a 4-way valve. The 4-way valve is configured to switch the motor coolant loop and the heat exchange circulation loop for the target temperature-controlled device between a series connection state and a mutual independence state. The motor coolant loop includes a radiator, and the radiator is configured to dissipate the heat from the motor coolant to ambient air. When a difference between the temperature of the target temperature-controlled device and an ambient temperature is greater than a second preset difference, the 4-way valve is controlled to connect the motor coolant loop in series to the heat exchange circulation loop for the target temperature-controlled device, so that the motor coolant absorbs heat from the target temperature-controlled device to cool the target temperature-controlled device, and the heat absorbed by the motor coolant is dissipated to the ambient air in the radiator.

In this way, when the difference between the temperature of the target temperature-controlled device and the ambient temperature is greater than the second preset difference, that is, the temperature of the target temperature-controlled device is much higher than the ambient temperature, the motor coolant absorbs the heat from the target temperature-controlled device, and dissipates the absorbed heat to the ambient air in the radiator, so that the target temperature-controlled device can be well cooled without running the refrigerant loop, thereby reducing energy consumption.

In addition, in the third aspect, another structure illustrated in the descriptions of the first aspect may be alternatively used.

Content of these aspects of this application is more clearly described in the following specific implementations.

### BRIEF DESCRIPTION OF DRAWINGS

FIG. 1 is a schematic diagram of an architecture of a thermal management system in which a motor and a controller are directly used for active heating according to a comparative example for comparison with an embodiment of this invention ;
FIG. 2 is a schematic diagram of a structure of a heat exchange circulation loop system of a thermal management system according to an embodiment of this invention ;
FIG. 3 is a schematic block diagram of a structure of the foregoing thermal management system;
FIG. 4 is a diagram depicting an operating principle of the foregoing thermal management system in a heat pump heating mode;
FIG. 5 is a diagram depicting an operating principle of the foregoing thermal management system in a cooling mode;
FIG. 6 is a diagram depicting an operating principle of the foregoing thermal management system in a battery passive cooling mode;
FIG. 7 is a diagram depicting an operating principle of the foregoing thermal management system in a battery passive heating mode;
FIG. 8 is a diagram depicting an operating principle of the foregoing thermal management system in an air conditioning defrost mode;
FIG. 9 is a diagram depicting an operating principle of the foregoing thermal management system in a battery no thermal management mode;
FIG. 10 is a schematic diagram of a structure of a heat exchange circulation loop system of a thermal management system according to a variation example of this invention ;
FIG. 11 is a schematic diagram of a structure of a heat exchange circulation loop system of a thermal management system according to another variation example of this invention ; and
FIG. 12 is a diagram depicting control logic of thermal management for a battery.

### DESCRIPTION OF EMBODIMENTS

In the following descriptions, a "connection" mentioned is usually a connection by using a pipeline, unless otherwise specified.

In addition, in the following descriptions, descriptions such as "first" and "second" are used, and are merely intended to distinguish between similar objects, but not to limit a sequence or importance.

For ease of understanding, some related comparative examples are described before the embodiments of this invention are described.

For example, in winter, because an ambient temperature is relatively low, a temperature of a battery cell of an electric vehicle is also relatively low. This causes problems such as a limitation on battery charging and discharging functions and a battery capacity attenuation. Therefore, a thermal management system of the electric vehicle is usually equipped with a Positive Temperature Coefficient (PTC) heater (positive temperature coefficient thermistor heater, PTC heater or PTC for short) or High Voltage Heater ( HVH) to heat the battery and keep the temperature of the battery cell above 0°C, so as to ensure that the battery operates at a relatively appropriate temperature.

In addition, in addition to a heating requirement of the battery, a passenger compartment of the electric vehicle also requires heating (that is, air conditioning heating) in winter. There are mainly two manners of air conditioning heating: (1) Heating is performed by using an air conditioning PTC. Specifically, direct heating by using an air-side PTC and indirect heating by using a water-side PTC are included. (2) A compressor of a heat pump system absorbs heat from an environment and then releases heat into the passenger compartment. However, an R134a refrigerant heat pump is used currently. Due to characteristics of a refrigerant, below -10°C, it can be hardly ensured that a heat requirement of the passenger compartment can be met only by absorbing heat from the environment. Therefore, most vehicles with a heat pump system are still equipped with an air conditioning PTC, mainly to ensure proper heating of a passenger compartment in an environment below -10°C.

To sum up, regardless of battery heating or air conditioning heating and regardless of whether a heat pump system is used, currently, an electric vehicle still mainly relies on a PTC. Currently, the PTC is sold on the market at a relatively high price, resulting in relatively high costs of a thermal management system using the PTC. In addition, for example, in China, climate and ambient temperatures in different regions vary greatly. In South China, the temperature is above 0°C throughout a year, and a battery heating requirement is relatively low. In addition, in some regions, even if the temperature is below 0°C in winter, a proportion of this time in a year is quite small. Therefore, if an entire series of a vehicle model is equipped with PTCs, utilization decreases in a further south region.

To resolve the foregoing problem, currently, some manufacturers tend to generate heat through stalling or low-efficiency operating of oil-cooled motors, to gradually replace PTCs. However, thermal efficiency of heating through stalling of a motor is the key to determining whether this technology can be applied. Specifically, heat generated by a motor and a motor control unit (MCU) cannot be 100% supplied to a coolant. A part of the heat is dissipated to an environment through motor and gear box housings. Only a part of the heat that is transferred to the coolant through oil in a heat exchanger can be actually used to heat a battery or a passenger compartment. In particular, in winter, a larger difference between an oil temperature of the motor and an ambient temperature results in greater heat loss caused by heat dissipation to the environment through the motor and gear box housings, and therefore results in lower thermal efficiency. Usually, when the battery and the passenger compartment are heated by cooling water of the motor, a water temperature required for heating the battery is 20°C or above, and a water temperature required for air conditioning heating is 60°C or above. To achieve these temperatures, a temperature of the motor needs to be higher. As a result, a large part of heat generated by the motor is dissipated to the environment, causing very low utilization of the heat generated by the motor.

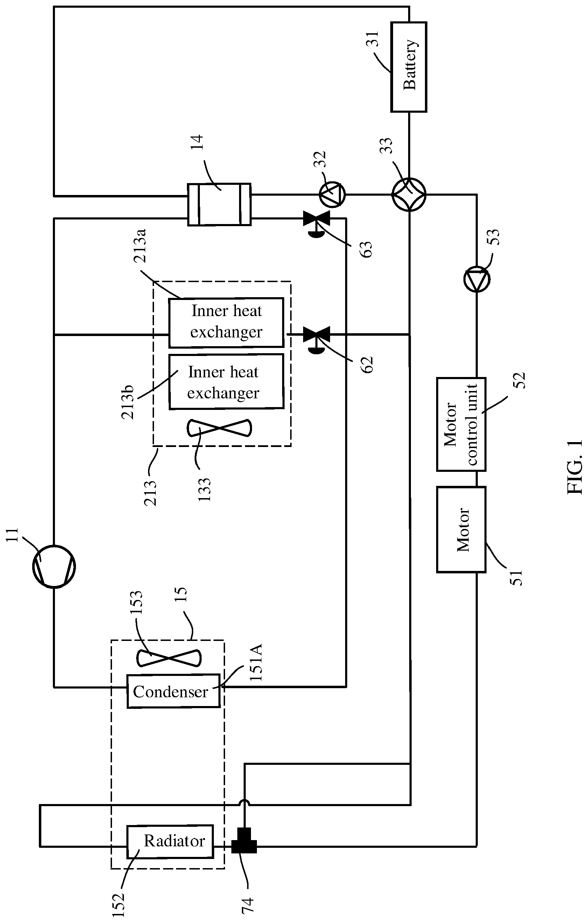

FIG. 1 is a schematic diagram of an architecture of a thermal management system for an electric vehicle in which a motor and a controller are directly used for active heating according to a comparative example. As shown in FIG. 1, the thermal management system 200 includes a compressor 11, an evaporator 213a, and a condenser 151A. These devices are connected in series through a refrigerant pipeline to constitute a refrigerant loop. In addition, the evaporator 213a, a fan 133, and an air conditioning PTC 213b constitute an HVAC box (Heating Ventilation and Air Conditioning Box, heating ventilation and air conditioning box, also referred to as an air conditioning box) 213. The evaporator 213a is used for cooling in a passenger compartment, and the air conditioning PTC 213b is used for heating in the passenger compartment.

In addition, the refrigerant loop further includes a battery heat exchanger 14 connected in parallel to the evaporator 213a. The battery heat exchanger 14 further belongs to a battery heat exchange circulation loop. The battery heat exchange circulation loop includes a battery 31 (to be precise, a temperature regulating water path in the battery 31), a drive pump 32, and the battery heat exchanger 14 that are connected in series through a water pipe.

In addition, the thermal management system 200 further includes a motor 51 and a motor control unit 52 (the motor 51 and the motor control unit 52 each include a cooling water path), a drive pump 53, a radiator 152, and a three-way valve 74. These devices are connected in series through a water pipe to constitute a motor cooling water path. The radiator 152 and the condenser 151A share a fan 153, and the three devices are assembled and disposed near a front grille of the vehicle to constitute a front module 15.

A four-way valve 33 is disposed between the battery heat exchange circulation loop and the motor cooling water path. A state of the four-way valve 33 can be switched so that the two water paths can switch between a series connection state and a mutual independence state.

Usually, when heat needs to be dissipated for the motor 51, the drive pump 53 enables water serving as a motor coolant to circulate in the motor cooling water path, so that water flowing through the motor 51 and the motor control unit 52 cools the motor 51 and the motor control unit 52 and is heated. Under control of the three-way valve 74, the heated water may flow to the radiator 152, and heat of the water is dissipated through the radiator 152 to air outside the passenger compartment.

In addition, for example, when an ambient temperature is relatively low in winter, the battery needs to be heated upon initial startup of the vehicle. In this case, the motor 51 is enabled to stall or operate at low efficiency, and the four-way valve 33 is switched so that the battery heat exchange circulation loop is connected in series to the motor cooling water path. In this way, water heated by the motor 51 and the motor control unit 52 flows to the battery 31, so that the battery 31 can be heated.

With this technology of heating the battery 31 through active heating by the motor 51 and the motor control unit 52, a battery body usually needs to be heated to a temperature of 0°C or above, and a motor cooler outlet water temperature needs to be 10°C or above. The following table compares heating efficiency of the motor 51 and the motor control unit 52 at an ambient temperature of -10°C and a flow rate of 10 L/min when an MCU inlet water temperature is controlled to be 10°C and 20°C.

**Table 1 Comparison of thermal efficiency of the motor and the MCU at inlet water temperatures of 10°C and 20° C**

| No. | Test name | Heat absorbed by a coolant/kW | Heat released by the motor and the MCU/kW | Total thermal efficiency/% |
|---|---|---|---|---|
| 1 | Inlet water temperature of 10°C, with the motor stalling | 3.9 | 4.8 | 81.1% |
| 2 | Inlet water temperature of 10°C, with the motor operating at 2000 rpm and an efficiency of 54% | 3.6 | 4.5 | 81.2% |
| 3 | Inlet water temperature of 20°C, with the motor stalling | 3.3 | 4.9 | 67.3% |
| 4 | Inlet water temperature of 20°C, with the motor operating at 2000 rpm and an efficiency of 54% | 3.0 | 4.6 | 64.9% |

The result in the foregoing table shows that a higher motor inlet water temperature results in lower thermal efficiency, and thermal efficiency at an inlet water temperature of 20°C is at least 10% lower than that at an inlet water temperature of 10°C. Because motor and gear box housings dissipate heat to a low-temperature environment, a higher overall temperature of the motor results in a larger proportion of heat dissipated to the environment and a smaller proportion of heat supplied to the coolant. Therefore, from a perspective of fully utilizing heat generated through active heating by the motor, it is inappropriate to use the heat from the motor directly as a high-temperature heat source. For example, hot water at 60°C is required for air conditioning heating. If hot water is heated to 60°C through active heating by the motor, thermal efficiency is very low.

Therefore, the embodiments of this invention provide a thermal management system capable of improving utilization of heat generated by a motor, and an electric vehicle with the system.

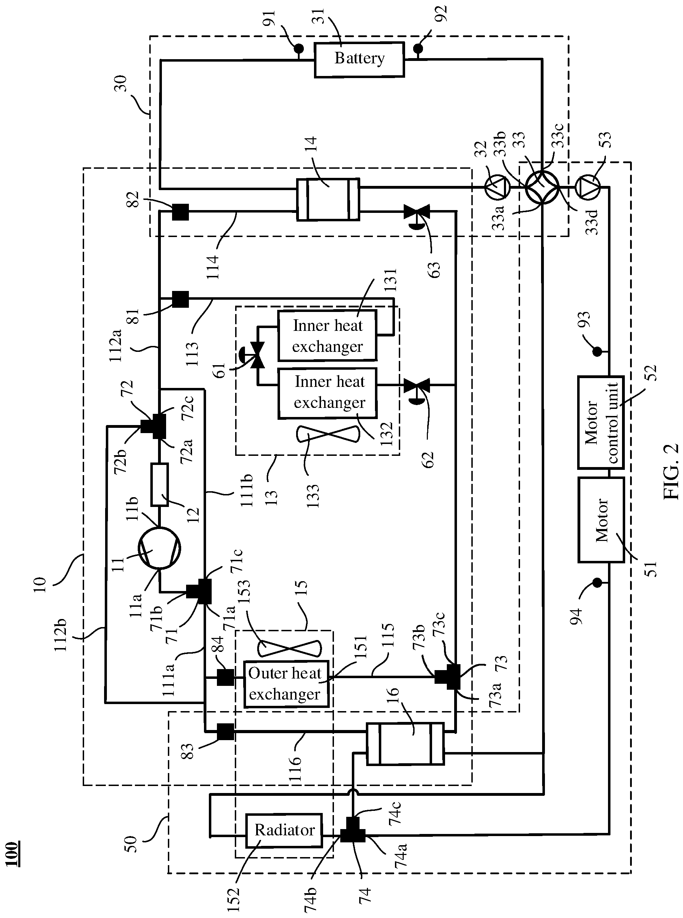

The following describes an embodiment of this invention with reference to FIG. 2 to FIG. 9.

This embodiment relates to a thermal management system 100, a method for controlling the thermal management system 100, and an electric vehicle (not shown in the figure) including the thermal management system 100. Regarding the electric vehicle, this embodiment is particularly applicable to a battery electric vehicle, and is also applicable to a hybrid vehicle. In addition to the thermal management system 100, typically, the electric vehicle further includes a battery 31, a motor 51, and a motor control unit 52. The battery 31 is configured to supply electric power to the motor 51 and a compressor 11, drive pumps 32 and 53, fans 133 and 153, and the like that are described below. The motor 51 is configured to drive a wheel (not shown in the figure) of the electric vehicle by using a gear box (not shown in the figure) and the like, to provide a driving force for running of the electric vehicle. The motor control unit 52 is configured to control the motor 51.

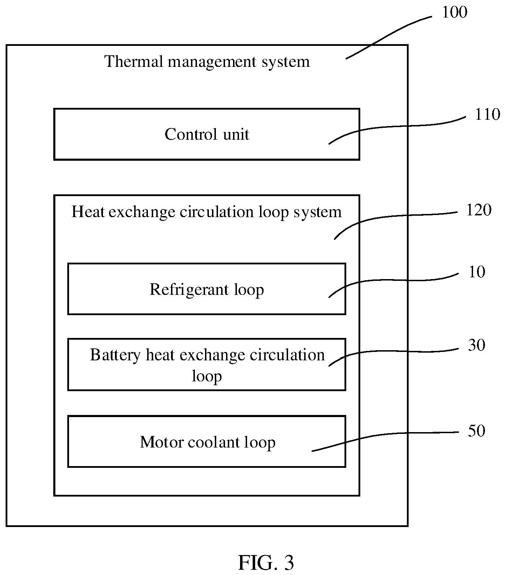

FIG. 2 is a schematic diagram of a structure of a heat exchange circulation loop system of the thermal management system in this embodiment. FIG. 3 is a schematic block diagram of a structure of the foregoing thermal management system.

As shown in FIG. 3, the thermal management system 100 has a control unit 110 and a heat exchange circulation loop system 120. Typically, the control unit 110 may be an ECU (Electronic Control Unit, electronic control unit), and is configured to control devices and components in the heat exchange circulation loop system 120 that are described below, so that the heat exchange circulation loop system 120 operates based on modes described in detail below. Refer to FIG. 2 and FIG. 3, the heat exchange circulation loop system 120 includes a refrigerant loop 10, a battery heat exchange circulation loop 30, and a motor coolant loop 50.

The refrigerant loop 10 is described below. As shown in FIG. 2, the refrigerant loop 10 includes the compressor 11, a gas-liquid separator 12, inner heat exchangers 131 and 132, a battery heat exchanger 14, an outer heat exchanger 151, and a low pressure chiller 16. These devices are connected through a refrigerant pipeline.

The compressor 11 is a driving source that enables a refrigerant (which may be, for example, a phase-change refrigerant such as R134a) to flow in the refrigerant loop 10, and has a refrigerant outlet 11a and a refrigerant inlet 11b.

The gas-liquid separator 12 is connected to the refrigerant inlet 11b side of the compressor 11 to separate a vapor-phase refrigerant from a liquid-phase refrigerant and prevent the liquid-phase refrigerant from entering the compressor 11.

The inner heat exchangers 131 and 132 are configured to exchange heat with air in a passenger compartment (not shown in the figure) of the electric vehicle, so as to heat or cool the air in the passenger compartment, and implement the so-called air conditioning function. In addition, the inner heat exchangers 131 and 132 are assembled with the fan 133 to constitute an air conditioning box 13. In this embodiment, the two inner heat exchangers 131 and 132 are disposed, and are connected in series through the refrigerant pipeline.

The battery heat exchanger 14 is shared by the refrigerant loop 10 and the battery heat exchange circulation loop 30, is connected to both a heat pump refrigerant pipeline and a battery circulation water path, and is configured to enable a refrigerant in the refrigerant loop 10 to heat or cool a heat exchange working medium in the battery heat exchange circulation loop 30 (in this embodiment, a mixture obtained by mixing water and ethylene glycol based on a specific proportion serves as the heat exchange working medium), so that a temperature of the battery 31 can be adjusted by using the heated or cooled heat exchange working medium.

The outer heat exchanger 151 is configured to enable heat exchange between the refrigerant in the refrigerant loop 10 and air outside the passenger compartment, including enabling the refrigerant to absorb heat from the external air and dissipate heat to the external air. In addition, in this embodiment, the outer heat exchanger 151 and a radiator 152 described below share the fan 153, and the three devices are usually disposed near a front grille of the electric vehicle to constitute a front module 15.

The low pressure chiller 16 is shared by the refrigerant loop 10 and the motor coolant loop 50, is connected to both the heat pump refrigerant pipeline and a motor coolant pipeline, and is configured to enable the refrigerant in the refrigerant loop 10 to absorb heat from a motor coolant in the motor coolant loop 50 through evaporation.

As described above, the compressor 11, the gas-liquid separator 12, the inner heat exchangers 131 and 132, the battery heat exchanger 14, the outer heat exchanger 151, and the low pressure chiller 16 are connected through the heat pump refrigerant pipeline. A specific connection structure of these devices is described below.

Specifically, the inner heat exchangers 131 and 132 are connected in parallel to the battery heat exchanger 14, where a branch in which the inner heat exchangers 131 and 132 are located is referred to as an inner heat exchanger branch 113, and a branch in which the battery heat exchanger 14 is located is referred to as a battery heat exchanger branch 114; the outer heat exchanger 151 is connected in parallel to the low pressure chiller 16, where a branch in which the outer heat exchanger 151 is located is referred to as an outer heat exchanger branch 115, and a branch in which the low pressure chiller 16 is located is referred to as a low pressure chiller branch 116; and the compressor 11, the inner heat exchangers 131 and 132 and the battery heat exchanger 14 that are connected in parallel, and the outer heat exchanger 151 and the low pressure chiller 16 that are connected in parallel are connected in series.

In this embodiment, the refrigerant outlet 11a of the compressor 11 is connected, through a first outlet branch 111a, to the outer heat exchanger 151 and the low pressure chiller 16 that are connected in parallel; and is connected, through a second outlet branch 111b, to the inner heat exchangers 131 and 132 and the battery heat exchanger 14 that are connected in parallel. The first outlet branch 111a and the second outlet branch 111b share a three-way valve 71. A state of the three-way valve 71 is switched so that the first outlet branch 111a and the second outlet branch 111b alternately switch between an open state and a closed state.

Specifically, the three-way valve 71 has three interfaces: 71a, 71b, and 71c. The interface 71b is connected to the refrigerant outlet 11a of the compressor 11. The interface 71a is connected to the outer heat exchanger 151 and the low pressure chiller 16. The interface 71c is connected to the inner heat exchangers 131 and 132 and the battery heat exchanger 14. When the three-way valve 71 is switched to a state in which the interface 71b is connected to the interface 71a, the first outlet branch 111a is open, and the second outlet branch 111b is closed. When the three-way valve 71 is switched to a state in which the interface 71b is connected to the interface 71c, the .first outlet branch 111a is closed, and the second outlet branch 111b is open.

In addition, the refrigerant inlet 11b of the compressor 11 is connected, through a first inlet branch 112a, to the inner heat exchangers 131 and 132 and the battery heat exchanger 14 that are connected in parallel; and is connected, through a second inlet branch 112b, to the outer heat exchanger 151 and the low pressure chiller 16 that are connected in parallel. The first inlet branch 112a and the second inlet branch 112b share a three-way valve 72. A state of the three-way valve 72 is switched so that the first inlet branch 112a and the second inlet branch 112b alternately switch between an open state and a closed state. Specifically, the three-way valve 72 has three interfaces: 72a, 72b, and 72c. The interface 72a is connected (through the gas-liquid separator 12) to the refrigerant inlet 11b of the compressor 11. The interface 72b is connected to the outer heat exchanger 151 and the low pressure chiller 16. The interface 72c is connected to the inner heat exchangers 131 and 132 and the battery heat exchanger 14. When the three-way valve 72 is switched to a state in which the interface 72a is connected to the interface 72c, the first inlet branch 112a is open, and the second inlet branch 112b is closed. When the three-way valve 72 is switched to a state in which the interface 72a is connected to the interface 72b, the first inlet branch 112a is closed, and the second inlet branch 112b is open.

In addition, in the inner heat exchanger branch 113, a location of the inner heat exchanger 131 is closer to the compressor 11 than that of the inner heat exchanger 132, and an electronic expansion valve 61 is disposed between the inner heat exchanger 131 and the inner heat exchanger 132. The electronic expansion valve 61 is a valve with an adjustable opening degree and can function as a switching valve and a throttle valve. Further, in the inner heat exchanger branch 113, an electronic expansion valve 62 is disposed on a side, of the inner heat exchanger 132, that is away from the inner heat exchanger 131, and a refrigerant temperature and pressure sensor 81 is disposed on a side, of the inner heat exchanger 131, that is close to the compressor 11.

In addition, an electronic expansion valve 63 connected in series to the battery heat exchanger 14 is disposed in the battery heat exchanger branch 114. In this embodiment, the electronic expansion valve 63 is disposed on a side, of the battery heat exchanger 14, that is away from the compressor 11. The electronic expansion valve 63 is a valve with an adjustable opening degree and can function as a switching valve and a throttle valve. In addition, a refrigerant temperature and pressure sensor 82 is disposed on a side, of the battery heat exchanger 14, that is close to the compressor 11.

In addition, the inner heat exchangers 131 and 132 and the battery heat exchanger 14 that are connected in parallel are connected, through a three-way valve 73, to one of the outer heat exchanger 151 and the low pressure chiller 16 that are connected in parallel. Specifically, the three-way valve 73 has three interfaces: 73a, 73b, and 73c. The interface 73a is connected to the low pressure chiller 16. The interface 73b is connected to the outer heat exchanger 151. The interface 73c is connected to the inner heat exchangers 131 and 132 and the battery heat exchanger 14 that are connected in parallel.

In this embodiment, the three-way valve 73 is a three-way valve capable of adjusting opening degrees of the interfaces 73a and 73b. By adjusting the opening degrees of the interfaces 73a and 73b (the opening degrees may be 0), a refrigerant flow rate of each of the outer heat exchanger 151 and the low pressure chiller 16 can be adjusted, and a refrigerant flow ratio between the outer heat exchanger 151 and the low pressure chiller 16 can be adjusted. Further, a heat supply amount shared by the outer heat exchanger 151 and the low pressure chiller 16 can be adjusted, as described below. The three-way valve 73 is an example of a 3-way valve for adjusting the refrigerant flow ratio between the outer heat exchanger 151 and the low pressure chiller 16 in this invention.

In addition, in the low pressure chiller branch 116, a refrigerant temperature and pressure sensor 83 is disposed on a side, of the low pressure chiller 16, that is close to the compressor 11. In the outer heat exchanger branch 115, a refrigerant temperature and pressure sensor 84 is disposed on a side, of the outer heat exchanger 151, that is close to the compressor 11. The refrigerant temperature and pressure sensors 83 and 84 are configured to detect a temperature and pressure of the refrigerant.

A structure of the battery heat exchange circulation loop 30 is described below. The battery heat exchange circulation loop 30 corresponds to a heat exchange circulation loop for a target temperature-controlled device in this invention.

As shown in FIG. 2, the battery heat exchange circulation loop 30 includes the battery 31 (specifically, an inner heat exchange water path of the battery 31), the drive pump 32, and the battery heat exchanger 14 that are connected in series. The battery 31 is configured to supply electric power to the motor 51, the compressor 11, the drive pumps 32 and 53, the fans 133 and 153, and the like. The drive pump 32 is a driving source that enables the heat exchange working medium to flow in the battery heat exchange circulation loop 30. As described above, the battery heat exchanger 14 is configured to enable heat exchange between the heat exchange working medium in the battery heat exchange circulation loop 30 and the refrigerant in the refrigerant loop 10. Driven by the drive pump 32, the heat exchange working medium flows through the battery heat exchanger 14, and absorbs heat from the refrigerant in the refrigerant loop 10 or dissipates heat to the refrigerant in the refrigerant loop 10, so that the heat exchange working medium is heated or cooled and can further heat or cool the battery 31.

In addition, in the battery heat exchange circulation loop 30, temperature sensors 91 and 92 are respectively disposed on two sides of the battery 31, and the temperature sensors 91 and 92 are configured to measure an outlet water temperature and an inlet water temperature of the battery 31.

In addition, a four-way valve 33 is further disposed in the battery heat exchange circulation loop 30. The four-way valve 33 is shared by the battery heat exchange circulation loop 30 and the motor coolant loop 50. As described in detail below, the four-way valve 33 is configured to switch the battery heat exchange circulation loop 30 and the motor coolant loop 50 between a series connection state and a mutual independence state.

The motor coolant loop 50 is described below.

As shown in FIG. 2, the motor coolant loop 50 includes the motor 51, the motor control unit 52, the radiator 152, the low pressure chiller 16, and the drive pump 53. As described above, the motor 51 is configured to drive a wheel (not shown in the figure) of the electric vehicle by using a gear box (not shown in the figure) and the like, to provide a driving force for running of the electric vehicle. The motor control unit 52 is configured to control the motor 51. The drive pump 53 is a driving source for driving the motor coolant to flow in the motor coolant loop 50. The radiator 152 is configured to enable heat exchange between the motor coolant and air outside the passenger compartment, to dissipate heat from the motor coolant to the air outside the passenger compartment. The low pressure chiller 16 is configured to enable heat exchange between the motor coolant and the refrigerant in the refrigerant loop 10, to transfer heat from the motor coolant to the refrigerant in the refrigerant loop 10. In other words, the low pressure chiller 16 is configured to enable the refrigerant in the refrigerant loop 10 to absorb the heat from the motor coolant. In addition, the air outside the passenger compartment herein corresponds to ambient air in this invention.

In the motor coolant loop 50, the radiator 152 is connected in parallel to the low pressure chiller 16, and the two devices are connected to the motor 51 through a three-way valve 74. Specifically, the three-way valve 74 has interfaces 74a, 74b, and 74c. The interface 74a is connected to the motor 51. The interface 74b is connected to the radiator 152. The interface 74c is connected to the low pressure chiller 16. When the three-way valve 74 is switched to a state in which the interface 74a is connected to the interface 74b, the radiator 152 (a branch in which the radiator 152 is located) is open, and the low pressure chiller 16 (a branch in which the low pressure chiller 16 is located) is closed. When the three-way valve 74 is switched to a state in which the interface 74a is connected to the interface 74c, the radiator 152 is closed, and the low pressure chiller 16 is open.

In addition, as described above, the motor coolant loop 50 and the battery heat exchange circulation loop 30 jointly have the four-way valve 33, and the motor coolant loop 50 and the battery heat exchange circulation loop 30 can be switched between the series connection state and the mutual independence state by using the four-way valve 33. Specifically, the four-way valve 33 has interfaces 33a, 33b, 33c, and 33d. The interfaces 33b and 33c are connected to pipelines on a side of the battery heat exchange circulation loop 30, and in this embodiment, are respectively connected to the drive pump 32 and the battery 31 through the pipelines. The interfaces 33a and 33d are connected to pipelines on a side of the motor coolant loop 50, and in this embodiment, are respectively connected to one of the motor 51 and the motor control unit 52, and one of the radiator 152 and the low pressure chiller 16 through the pipelines. When the four-way valve 33 is switched to a state in which the interfaces 33a and 33d are connected and the interfaces 33b and 33c are connected, the motor coolant loop 50 and the battery heat exchange circulation loop 30 are independent of each other. When the four-way valve 33 is switched to a state in which the interface 33a is connected to the interface 33b and the interface 33c is connected to the interface 33d, the motor coolant loop 50 is connected in series to the battery heat exchange circulation loop 30.

In addition, in this embodiment, the motor coolant in the motor coolant loop 50 is the same as the heat exchange working medium in the battery heat exchange circulation loop 30. Therefore, it is possible to connect the motor coolant loop 50 and the battery heat exchange circulation loop 30 in series.

In addition, in this embodiment, the temperature sensors 93 and 94 are respectively disposed on two sides of the motor 51 and the motor control unit 52 as a whole in the motor coolant loop 50, and are configured to detect the motor outlet water temperature and the motor inlet water temperature.

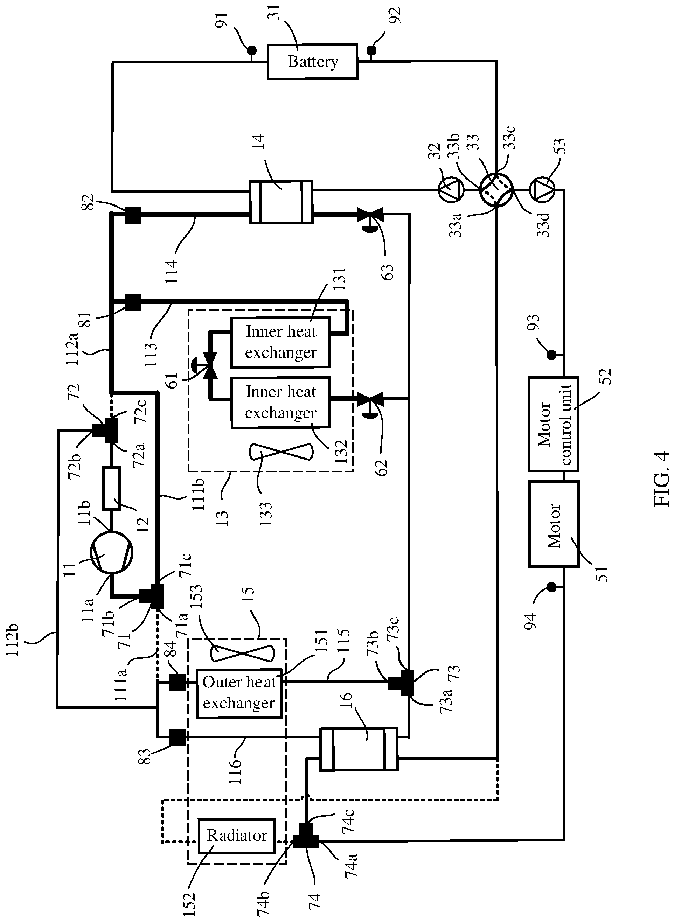

The thermal management system 100 in this embodiment basically has the foregoing circulation loop structure. With this structure, under control of the control unit 110, a heat pump heating mode, a cooling mode, a battery passive cooling mode, a battery passive heating mode, an air conditioning defrost and dehumidification mode, and a battery no thermal management mode can be implemented. These modes are described below with reference to FIG. 4 to FIG. 9, including descriptions of a control method for enabling the thermal management system 100 to implement these modes and descriptions of states of the heat exchange circulation loop system 120 of the thermal management system 100 in these modes.

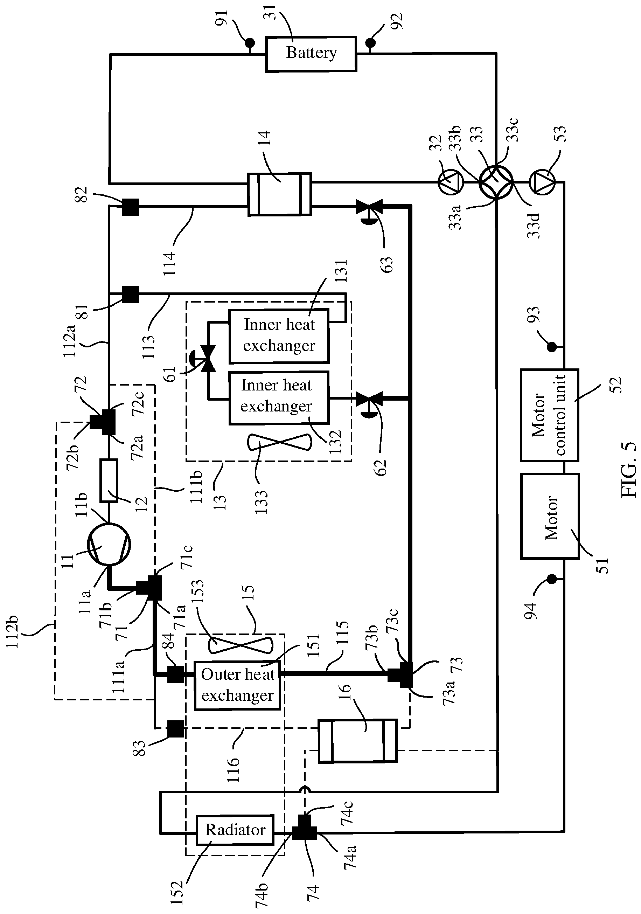

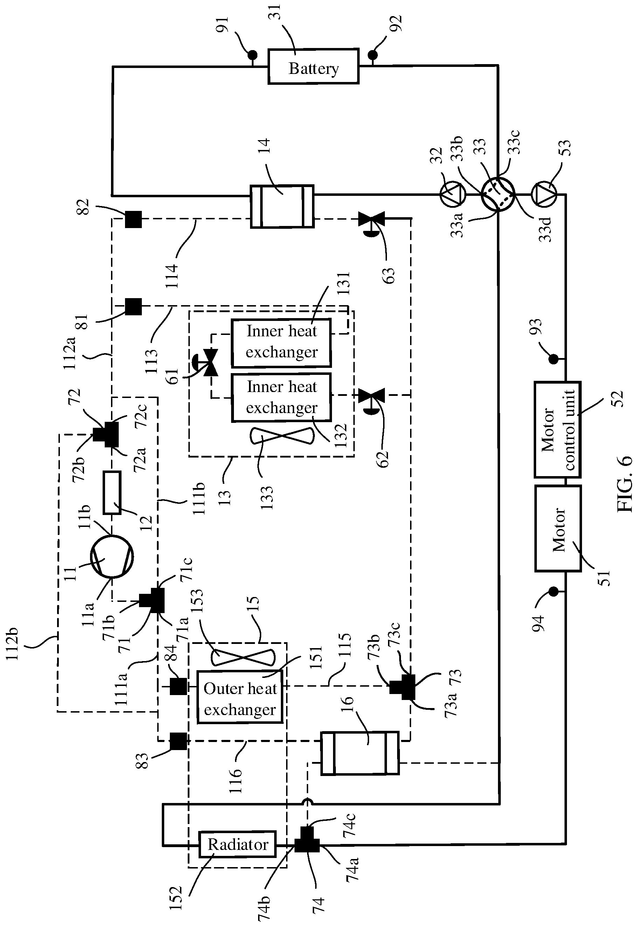

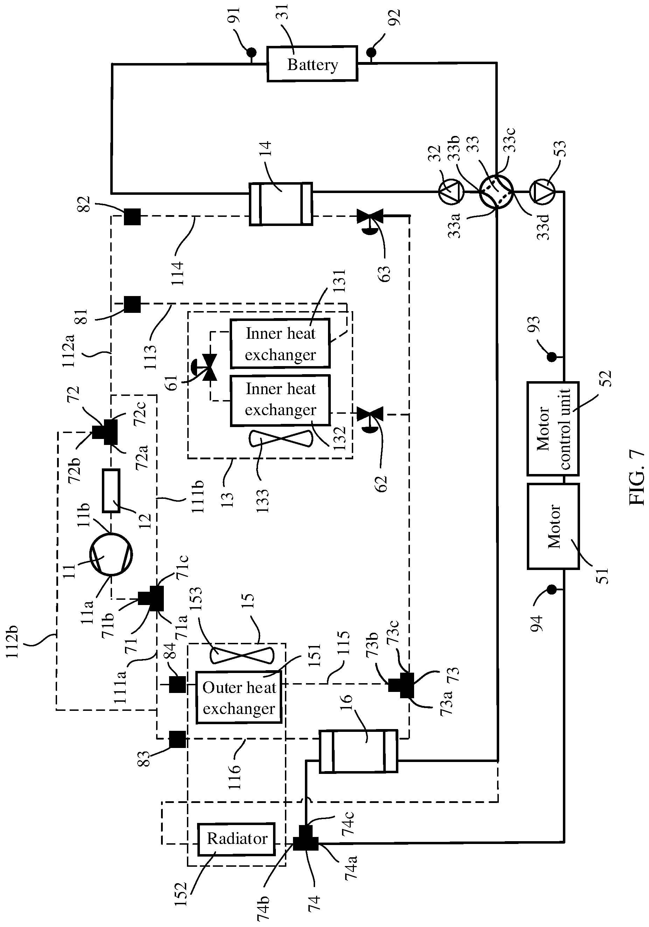

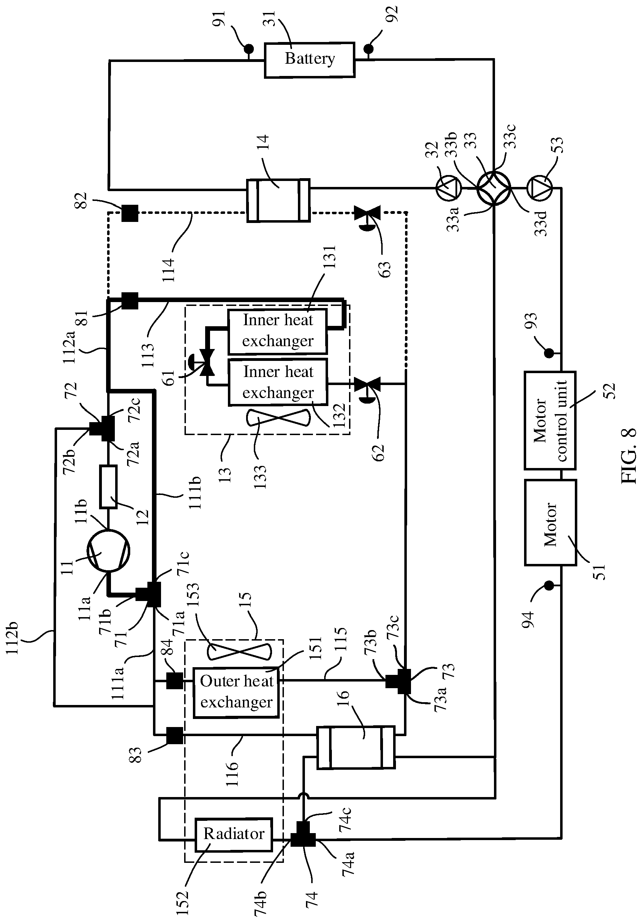

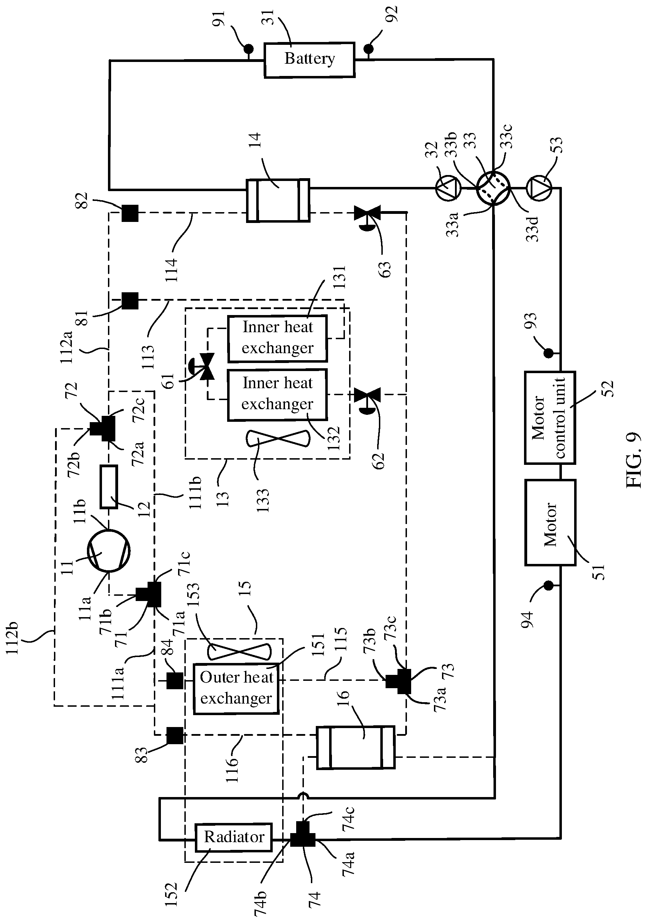

FIG. 4 is a diagram depicting an operating principle of the foregoing thermal management system in a heat pump heating mode. FIG. 5 is a diagram depicting an operating principle of the foregoing thermal management system in a cooling mode. FIG. 6 is a diagram depicting an operating principle of the foregoing thermal management system in a battery passive cooling mode. FIG. 7 is a diagram depicting an operating principle of the foregoing thermal management system in a battery passive heating mode. FIG. 8 is a diagram depicting an operating principle of the foregoing thermal management system in an air conditioning defrost mode. FIG. 9 is a diagram depicting an operating principle of the foregoing thermal management system in a battery no thermal management mode.

In addition, in FIG. 4 to FIG. 9, for ease of understanding, a flow path in a closed state in the heat exchange circulation loop system 120 in each mode is represented by a dashed line, and a flow path in a high-temperature state in the refrigerant loop 10 is represented by a bold solid line.

### <Heat pump heating mode>

The heat pump heating mode includes three sub-modes: a battery heating mode, an air conditioning heating mode, and a battery and air conditioning heating mode.

First, the battery and air conditioning heating mode is described. In this mode, as shown in FIG. 4, the refrigerant loop 10 operates, and the battery heat exchange circulation loop 30 and the motor coolant loop 50 each operate independently.

In this case, in the motor coolant loop 50, the motor control unit 52 controls, according to an instruction sent by the control unit 110 directly or indirectly by using a vehicle control unit (not shown in the figure), the motor 51 to stall or operate at low efficiency. In addition, under control of the control unit 110, the three-way valve 74 is switched to a state in which the interface 74a is connected to the interface 74c, the branch in which the low pressure chiller 16 is located is open, and the branch in which the radiator 152 is located is closed. In this state, the drive pump 53 drives the motor coolant to flow, and the motor coolant is heated by cooling the motor 51 and the motor control unit 52. As described below, in the low pressure chiller 16, the heated motor coolant transfers heat to the refrigerant in the refrigerant loop 10.

In the refrigerant loop 10, under control of the control unit 110, the three-way valve 71 is switched to a state in which the interface 71b is connected to the interface 71c, the three-way valve 72 is switched to a state in which the interface 72a is connected to the interface 72b, the electronic expansion valve 61 is switched to a fully open state, the electronic expansion valve 62 is switched to a throttling state, and the electronic expansion valve 63 is switched to a fully open state.

In this way, in the refrigerant loop 10, a high-temperature and high-pressure refrigerant flowing out of the refrigerant outlet 11a of the compressor 11 flows into the inner heat exchangers 131 and 132, and exchanges, in the inner heat exchangers 131 and 132, heat with air in the passenger compartment to release heat to the air in the passenger compartment, so that the passenger compartment can be heated; and another high-temperature and high-pressure refrigerant enters the battery heat exchanger 14, and exchanges, in the battery heat exchanger 14, heat with the heat exchange working medium in the battery heat exchange circulation loop 30 to release heat to the heat exchange working medium in the battery heat exchange circulation loop 30, so that the battery is heated by the heated heat exchange working medium.

A high-temperature refrigerant flowing out of the inner heat exchanger 131 is throttled by the electronic expansion valve 62 into vapor and liquid phases. A refrigerant flowing out of the battery heat exchanger 14 is throttled by the electronic expansion valve 63 into vapor and liquid phases. The two refrigerants are combined and then distributed by the three-way valve 73 into two refrigerants. One refrigerant passes through the interface 73a of the three-way valve 73, enters the low pressure chiller 16, and evaporates in the low pressure chiller 16 into a vapor-phase refrigerant to absorb heat from the motor coolant. The other refrigerant passes through the interface 73b, enters the outer heat exchanger 151, and evaporates in the outer heat exchanger 151 to absorb heat from the air outside the passenger compartment. Then the two refrigerants return to the compressor through the refrigerant inlet 11b of the compressor 11 to complete a cycle.

As described above, in this embodiment, opening degrees of the interface 73a and the interface 73b of the three-way valve 73 are adjustable, so that refrigerant flow rates of the outer heat exchanger 151 and the low pressure chiller 16 can be distributed, to adjust a heat supply amount shared by the outer heat exchanger 151 and the low pressure chiller 16. For example, a specific adjustment manner may be as follows: When an ambient temperature (an air temperature outside the passenger compartment) is higher than a preset temperature (for example, -10°C), heat absorbed from an environment can meet a heating requirement. A refrigerant flow rate is adjusted by using the three-way valve 73, so that most or all of refrigerants flow to the outer heat exchanger 151. When all of the refrigerants flow to the outer heat exchanger 151, the motor 51 can stop operating. When an ambient temperature is lower than a preset temperature (for example, -10°C) and sufficient heat cannot be absorbed from an environment, or when a heat exchange function is degraded due to frosting of the outer heat exchanger 151 after long-term use, a refrigerant flow rate is adjusted by using the three-way valve 73, so that most of refrigerants flow to the low pressure chiller 16.

An implementation of the battery and air conditioning heating mode is described above. Based on the battery and air conditioning heating mode, the battery heating mode can be implemented by closing the electronic expansion valve 61 to close the inner heat exchanger branch 113. In addition, based on the battery and air conditioning heating mode, the air conditioning heating mode can be implemented by closing the electronic expansion valve 63.

In this embodiment, when heating is performed through active heating by the motor 51, heat from the motor coolant is absorbed by the refrigerant in the refrigerant loop 10. Then the refrigerant that has absorbed the heat releases the heat to the air in the passenger compartment or the heat exchange working medium in battery heat exchange circulation loop 30. In other words, in this embodiment, the heat from the motor coolant is transferred by the refrigerant in the refrigerant loop 10 to a heated object (the battery 31 or the air in the passenger compartment).

It is well known that a principle of a heat pump is to transfer heat through heat absorption and heat release by a refrigerant in a process of switching between a vapor phase and a liquid phase. During heating, heat exchange can be effectively performed to heat a heated object to a required temperature, without requiring a heat source from which the refrigerant absorbs heat to have a very high temperature. Therefore, in this embodiment in which heat from the motor 51 is transferred by the refrigerant loop 10, it is not necessarily required that the motor coolant serving as a heat source from which a refrigerant of a heat pump absorbs heat be heated by the motor 51 and the motor control unit 52 to a high temperature such as 20°C or 60°C in the foregoing descriptions. Usually, a corresponding heating requirement can be met by controlling the motor outlet water temperature to be, for example, within 10°C. In this way, a temperature difference between the motor 51 and the motor control unit 52 and an environment is reduced, heat loss caused by heat dissipation from the motor 51 and the motor control unit 52 to the environment is reduced, and utilization of heat from the motor is improved.

In addition, in this embodiment, refrigerant flow rates of the low pressure chiller 16 and the outer heat exchanger 151 are adjusted by using the three-way valve 73, so that a heat supply amount shared by the low pressure chiller 16 and the outer heat exchanger 151 can be adjusted. For example, when an ambient temperature is relatively high, heat may be absorbed from an environment mainly by the outer heat exchanger 151 or only by the outer heat exchanger 151, and a refrigerant flow rate of the low pressure chiller 16 is made to be relatively small or zero 3-way valve. That is, heat generated by the motor 51 is reduced, or the motor 51 is turned off, without supplying heat through stalling or low-efficiency operating of the motor, thereby suppressing use of a motor-based heating mode with relatively low heat conversion efficiency and reducing energy consumption. When an ambient temperature is relatively low, or when the outer heat exchanger is frosted after long-term use, a refrigerant flow rate of the low pressure chiller 16 may be increased by using the valve 73, to increase a heat supply amount shared by the low pressure chiller 16 (in other words, a heating amount shared by the motor 51 and the motor control unit 52), thereby avoiding a failure to heat the battery 31 or the passenger compartment to a required temperature due to an insufficient heating amount.

### <Cooling mode>

The cooling mode includes three sub-modes: a battery cooling mode, an air conditioning cooling mode, and a battery and air conditioning cooling mode.

First, the battery and air conditioning cooling mode is described. As shown in FIG. 5, in the battery and air conditioning cooling mode, the refrigerant loop 10 operates, and the battery heat exchange circulation loop 30 and the motor coolant loop 50 each operate independently.

In the refrigerant loop 10, a high-temperature and high-pressure refrigerant flowing out of the refrigerant outlet 11a of the compressor 11 enters the outer heat exchanger 151 through the interfaces 71b and 71a of the three-way valve 71, releases heat to the air outside the passenger compartment in the outer heat exchanger 151, and is divided into two refrigerants after passing through the interfaces 73b and 73c of the three-way valve 73. One refrigerant is throttled into a liquid-phase refrigerant by the electronic expansion valve 62 in a throttling state. The liquid-phase refrigerant enters the inner heat exchangers 131 and 132, and evaporates in the inner heat exchanger 131 and 132 to absorb heat from the air in the passenger compartment, so as to cool the passenger compartment. The other refrigerant is throttled into a liquid-phase refrigerant by the electronic expansion valve 63 in a throttling state. The liquid-phase refrigerant enters the battery heat exchanger 14, and evaporates in the battery heat exchanger 14 to absorb heat from the heat exchange working medium in the battery heat exchange circulation loop 30, so as to cool the heat exchange working medium in the battery heat exchange circulation loop 30.

In the battery heat exchange circulation loop 30, driven by the drive pump 32, water cooled in the battery heat exchanger 14 enters the battery 31 to cool the battery 31.

In addition, in the refrigerant loop 10, the interface 73a of the three-way valve 73 is closed, so that the refrigerant does not flow through the low pressure chiller 16.

In addition, in this embodiment, in the battery and air conditioning cooling mode, the three-way valve 74 in the motor coolant loop 50 is switched to a state in which the interface 74a is connected to the interface 74b. Driven by the drive pump 53, the motor coolant flows through the motor 51 and the motor control unit 52, enters the radiator 152, dissipates heat to the air outside the passenger compartment in the radiator 152, and then flows back to the motor 51 and the motor control unit 52 through the drive pump 53 to complete a cycle. In addition, in the motor coolant loop 50, the interface 74a and the interface 74c of the three-way valve 74 are not connected, and the motor coolant does not flow through the low pressure chiller 16.

Based on the implementation of the battery and air conditioning cooling mode, the battery cooling mode can be implemented by closing the electronic expansion valve 62, and the air conditioning cooling mode can be implemented by closing the electronic expansion valve 63.

### <Battery passive cooling mode>

As shown in FIG. 6, when a battery temperature is relatively high and an ambient temperature is relatively low, the four-way valve 33 may be switched to connect the battery heat exchange circulation loop 30 and the motor coolant loop 50 in series, and connect them to the radiator 152, to cool the battery 31 and the motor 51 by using the radiator 152. In this case, the refrigerant loop 10 does not operate.

In this embodiment, the battery heat exchange circulation loop 30 is connected in series to the motor coolant loop 50 to dissipate heat by using the radiator 152 in the motor coolant loop 50. Compared with a structure in which a radiator is disposed in each of the two loops, this can reduce manufacturing costs.

### <Battery passive heating mode>

As shown in FIG. 7, when a battery temperature is relatively low and the motor has a relatively large amount of residual heat, the four-way valve 33 may be switched to connect the motor coolant loop 50 and the battery heat exchange circulation loop 30 in series, and short-circuit the radiator 152, to heat the battery 31 by using the residual heat from the motor. In this case, the refrigerant loop 10 does not operate.

### <Air conditioning defrost and dehumidification mode>

As shown in FIG. 8, based on the heat pump heating mode, the electronic expansion valve 61 is switched to a throttling state in the air conditioning defrost and dehumidification mode. The inner heat exchanger 132 serves as an inner condenser, and the inner heat exchanger 131 serves as an inner evaporator. Moist air is cooled and dehumidified by the inner heat exchanger 131, then heated by the inner heat exchanger 132, and then sent to the passenger compartment. In this embodiment, the two inner heat exchangers 131 and 132 are disposed. In addition to the air conditioning defrost and dehumidification mode, a technical effect of full heat exchange in the heat pump heating mode and cooling mode is further achieved.

### <Battery no thermal management mode>

As shown in FIG. 9, in the battery no thermal management mode, the refrigerant loop 10 does not operate, and the four-way valve 33 is switched to a state in which the battery heat exchange circulation loop 30 and the motor coolant loop 50 are independent of each other, so that the battery heat exchange circulation loop 30 and the motor coolant loop 50 operate separately. In addition, in the motor coolant loop 50, the motor coolant flows through the radiator 152 and does not flow through the low pressure chiller 16.

Control logic of the control unit 110 for thermal management of the battery is described below.

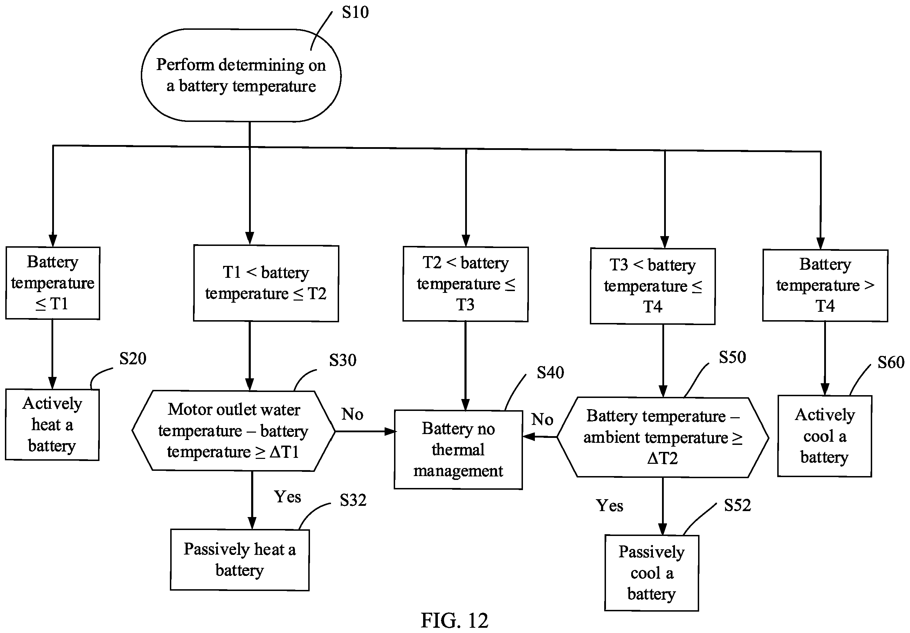

Refer to FIG. 12, first, determining is performed on a battery temperature in step S10. When the battery temperature is ≤ T1, step S20 is performed: The heat pump heating mode is enabled, active heating is performed by using the motor 51, and heat is transferred from the motor 51 to the battery 31 through the refrigerant loop 10. In addition, the battery temperature herein may be obtained by a battery cell temperature sensor in a battery pack. The first preset value T1 herein is a battery temperature threshold, and for example, may be set to approximately 0 degrees based on experience. In addition, the following second preset value T2, third preset value T3, and fourth preset value T4 are also battery temperature thresholds.

When T1 < the battery temperature ≤ T2 (the second preset value), in step S30, it is determined whether "a motor outlet water temperature (a temperature measured by a temperature sensor 94) - the battery temperature" is ≥ Δ T1 (a first preset difference), that is, it is determined whether the motor outlet water temperature is higher than the battery temperature by at least Δ T1. When a determining result is "yes", step S32 is performed: The battery passive heating mode is enabled, so that the motor coolant loop 50 is connected in series to the battery heat exchange circulation loop 30, to directly heat the battery by using the motor coolant. When a determining result is "no", step S40 is performed: The thermal management system 100 is enabled to be in the battery no thermal management mode. The first preset difference ΔT1 herein is a threshold of a difference between the motor outlet water temperature (in other words, a motor outlet coolant temperature) and the battery temperature. In addition, the motor outlet water temperature herein corresponds to the motor outlet coolant temperature in this invention, and is a temperature of the motor coolant when the motor coolant flows out of the motor 51 side.

When T2 < the battery temperature ≤ T3 (the third preset value), step S50 is performed: It is determined whether "the battery temperature - an ambient temperature" is A Δ T2 (a second preset difference). When a determining result is "yes", step S52 is performed: The battery passive cooling mode is enabled, so that the motor coolant loop 50 is connected in series to the battery heat exchange circulation loop 30, to cool the battery 31 by using the radiator 152. When a determining result is "no", step S40 is performed: The thermal management system 100 is enabled to be in the battery no thermal management mode. In addition, the second preset difference ΔT2 herein is a threshold of a difference between the battery temperature and the ambient temperature, and a value of the second preset difference ΔT2 may be set to a same value as that of the first preset difference ΔT1, for example, any value such as 10 degrees.

When the battery temperature > T4 (the fourth preset value), step S60 is performed: The cooling mode is enabled, so that the refrigerant loop 10 operates for cooling, to cool the battery 31.

In addition, it can be understood from the foregoing descriptions that a temperature value relationship among T1, T2, T3, and T4 is T1 < T2 < T3 < T4. For example, T2 is set to any value ranging from several degrees to more than 10 degrees, T3 is set to any value ranging from more than 20 degrees to more than 30 degrees, and T4 is set to any value ranging from more than 30 degrees to more than 40 degrees.

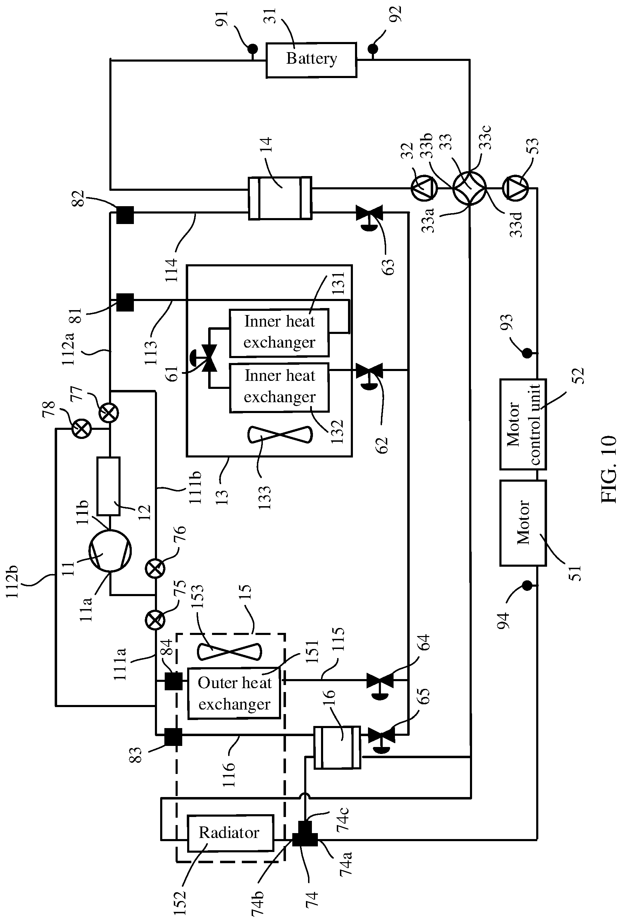

The following describes a variation example of this invention with reference to FIG 10.

FIG. 10 is a schematic diagram of a structure of a heat exchange circulation loop system of a thermal management system according to a variation example of this invention.

As shown in FIG. 10, a difference between this variation example and the foregoing embodiment lies in that, substituting for the three-way valve 73 in the foregoing embodiment, an electronic expansion valve 64 is disposed in the outer heat exchanger branch 115, and an electronic expansion valve 65 is disposed in the low pressure chiller branch 116, so that a same function as that of the three-way valve 73 can be implemented, that is, adjusting refrigerant flow rates of the outer heat exchanger 151 and the low pressure chiller 16. In the foregoing embodiment, the three-way valve 73 including interfaces with adjustable opening degrees is used, and costs of the three-way valve are relatively high. However, in this variation example, the electronic expansion valves 64 and 65 are used to substitute for the three-way valve 73, thereby reducing manufacturing costs.

In addition, a difference between this variation example and the foregoing embodiment further lies in that, substituting for the three-way valve 71 in the foregoing embodiment, a stop valve 75 is disposed in the first outlet branch 111a, and a stop valve 76 is disposed in the second outlet branch 111b; and substituting for the three-way valve 72 in the foregoing embodiment, a stop valve 77 is disposed in the first inlet branch 112a, and a stop valve 78 is disposed in the second inlet branch 112b. The stop valves 75 and 76 and the three-way valve 71 implement a same function, and can alternately switch the first outlet branch 111a and the second outlet branch 111b between an open state and a closed state. The stop valves 77 and 78 and the three-way valve 72 implement a same function, and can alternately open and close the first inlet branch 112a and the second inlet branch 112b. In this embodiment, the stop valves are used to implement the function, thereby achieving a technical effect of low manufacturing costs.

In addition, other structures in this variation example are the same as those in the foregoing embodiment, same reference signs are used in FIG. 10, and detailed descriptions thereof are omitted.

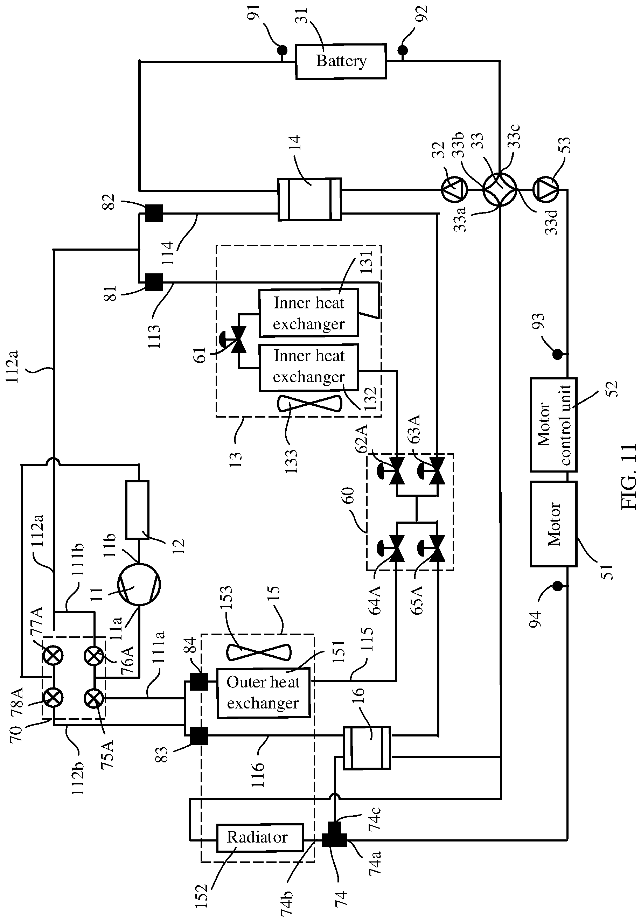

FIG. 11 is a schematic diagram of a structure of a heat exchange circulation loop system of a thermal management system according to another variation example of this invention.

The variation example shown in FIG. 11 is obtained through variation based on FIG. 10. A difference between the structure in this variation example and that in FIG. 10 lies in that, in this variation example, one integrated electronic expansion valve 60 is used to substitute for the electronic expansion valves 62, 63, 64, and 65. The integrated electronic expansion valve 60 integrates four electronic expansion valves 62A, 63B, 64C, and 65D. The electronic expansion valves 62A, 63B, 64C, and 65D have same functions as those of the electronic expansion valves 62, 63, 64, and 65 respectively. In addition, the four electronic expansion valves 62A, 63B, 64C, and 65D can share a controller because they are integrated, thereby reducing manufacturing costs. In addition, compared with the structure in FIG. 10, pipelines among the electronic expansion valves 62, 63, 64, and 65 are changed into inner pipelines among the electronic expansion valves 62A, 63B, 64C, and 65D, thereby improving operating reliability, reducing an assembly time required for connecting the pipelines, and further reducing manufacturing costs.

In addition, a difference between FIG. 11 and FIG. 10 further lies in that, in FIG. 11, one integrated stop valve 70 is used to substitute for the four stop valves 75, 76, 77, and 78. The integrated stop valve 70 integrates four stop valves 75A, 76A, 77A, and 78A. The stop valves 75A, 76A, 77A, and 78A have same functions as those of the stop valves 75, 76, 77, and 78 respectively. The four stop valves 75A, 76A, 77A, and 78A can share a controller because they are integrated, thereby reducing manufacturing costs. In addition, a technical effect of improving reliability and reducing an assembly time is further achieved.

The foregoing descriptions are merely example embodiments of this invention, but are not intended to limit this invention Any modification, equivalent replacement, or improvement made without departing from the invention as claimed should fall within the protection scope of this invention.

For example, in the foregoing descriptions, a mixture obtained by mixing water and ethylene glycol based on a specific proportion serves as the motor coolant and the heat exchange working medium in the battery heat exchange circulation loop 30. However, it is self-evident that this invention is not limited thereto, and another type of heat exchange working medium may be used. In addition, heat of the refrigerant in the refrigerant loop 10 may be alternatively received by airflow to heat the battery.

In addition, in the foregoing descriptions, an example in which the thermal management system is applied to the electric vehicle is used for description. However, this invention is not limited thereto, and the thermal management system may be alternatively applied to another scenario with a motor. For example, the thermal management system may be applied to an airplane. In addition, in the foregoing descriptions, the target temperature-controlled space is described by using the passenger compartment of the electric vehicle as an example, and the target temperature-controlled device is described by using the battery as an example. However, the present invention is not limited thereto, and the thermal management system may be alternatively applied to thermal management of another space or device that requires temperature control.

## Claims

1. A thermal management system (100) based on heating by a motor, comprising:
a refrigerant loop (10) and a motor coolant loop (50), wherein
the refrigerant loop (10) and the motor coolant loop (50) jointly comprise a low pressure chiller (16), and the low pressure chiller (16) is configured to enable a refrigerant in the refrigerant loop (10) to absorb heat from a motor coolant in the motor coolant loop (50) through evaporation, to heat a target temperature-controlled space and/or a target temperature-controlled device,
**characterized in that**
the refrigerant loop (10) comprises:
a compressor (11) that has a refrigerant outlet (11a) and a refrigerant inlet (11b);
a first outlet branch (111a), configured to connect the refrigerant outlet (11a) to the low pressure chiller (16) and/or the outer heat exchanger (151), wherein the outer heat exchanger (151) is configured to enable heat exchange between the refrigerant and air outside the target temperature-controlled space;
a second outlet branch (111b), configured to connect the refrigerant outlet (11a) to the inner heat exchanger (131, 132) and/or the heat exchanger for the target temperature-controlled device, wherein the inner heat exchanger (131, 132) is configured to enable heat exchange between the refrigerant and air in the target temperature-controlled space, and the heat exchanger for the target temperature-controlled device is configured to enable heat exchange between the refrigerant and the heat exchange working medium for adjusting the temperature of the target temperature-controlled device;
a first inlet branch (112a), configured to connect the refrigerant inlet (11b) to the inner heat exchanger (131, 132) and/or the heat exchanger for the target temperature-controlled device; and
a second inlet branch (112b), configured to connect the refrigerant inlet (11b) to the low pressure chiller (16) and/or the outer heat exchanger (151), wherein
the first outlet branch (111a), the second outlet branch (111b), the first inlet branch (112a), and the second inlet branch (112b) respectively have a first stop valve, a second stop valve, a third stop valve, and a fourth stop valve for controlling opening and closing of the branch.

2. The thermal management system according to claim 1, wherein
the refrigerant loop (10) further comprises:
an outer heat exchanger (151), configured to enable heat exchange between the refrigerant and air outside the target temperature-controlled space, and connected in parallel to the low pressure chiller (16); and
a 3-way valve, configured to adjust a refrigerant flow ratio between the low pressure chiller (16) and the outer heat exchanger (151).

3. The thermal management system according to claim 2, wherein
the 3-way valve comprises:
a first electronic expansion valve, connected in series to the low pressure chiller (16), and configured to adjust a refrigerant flow rate of the low pressure chiller (16); and
a second electronic expansion valve, connected in series to the outer heat exchanger (151), and configured to adjust a refrigerant flow rate of the outer heat exchanger (151).

4. The thermal management system according to claim 3, wherein
the refrigerant loop (10) further comprises:
a heat exchanger for the target temperature-controlled device, configured to enable heat exchange between the refrigerant and a heat exchange working medium for adjusting a temperature of the target temperature-controlled device;
an inner heat exchanger, configured to enable heat exchange between the refrigerant and air in the target temperature-controlled space;
a third electronic expansion valve, connected in series to the heat exchanger for the target temperature-controlled device, and configured to control a refrigerant flow rate of the heat exchanger for the target temperature-controlled device; and
a fourth electronic expansion valve, connected in series to the inner heat exchanger, and configured to control a refrigerant flow rate of the inner heat exchanger.

5. The thermal management system according to claim 4, wherein the first electronic expansion valve, the second electronic expansion valve, the third electronic expansion valve, and the fourth electronic expansion valve are integrated.

6. The thermal management system according to claim 1, wherein the first stop valve, the second stop valve, the third stop valve, and the fourth stop valve are integrated.

7. The thermal management system according to any one of claims 1 to 6, further comprising:
a heat exchange circulation loop (30) for the target temperature-controlled device, wherein the heat exchange circulation loop (30) for the target temperature-controlled device and the refrigerant loop (10) jointly comprise the heat exchanger for the target temperature-controlled device, and the heat exchanger for the target temperature-controlled device is configured to enable heat exchange between the refrigerant and a heat exchange working medium in the heat exchange circulation loop for the target temperature-controlled device.

8. The thermal management system according to claim 7, wherein
the motor coolant is the same as the heat exchange working medium in the heat exchange circulation loop (30) for the target temperature-controlled device; and
the motor coolant loop (50) and the heat exchange circulation loop (30) for the target temperature-controlled device jointly comprise a 4-way valve, and the 4-way valve is configured to switch the motor coolant loop (50) and the heat exchange circulation loop (30) for the target temperature-controlled device between a series connection state and a mutual independence state.

9. The thermal management system according to claim 9, wherein the motor coolant loop (50) comprises a radiator (152), and the radiator (152) is configured to dissipate heat from the motor coolant to the air outside the target temperature-controlled space.

10. The thermal management system according to any one of claims 1 to 10, wherein the thermal management system is applied to an electric vehicle, the target temperature-controlled space is a passenger compartment, and the target temperature-controlled device is a battery.

11. An electric vehicle, comprising the thermal management system according to any one of claims 1 to 10.

12. A method for controlling a thermal management system (100), wherein the thermal management system comprises a refrigerant loop (10) and a motor coolant loop (50);
the refrigerant loop (10) and the motor coolant loop (50) jointly comprise a low pressure chiller (16), and the low pressure chiller (16) is configured to enable a refrigerant in the refrigerant loop (10) to absorb heat from a motor coolant in the motor coolant loop (50) through evaporation, to heat a target temperature-controlled device, **characterized in that** the refrigerant loop (10) comprises:
a compressor (11) that has a refrigerant outlet (11a) and a refrigerant inlet (11b);
a first outlet branch (111a), configured to connect the refrigerant outlet (11a) to the low pressure chiller (16) and/or the outer heat exchanger (151), wherein the outer heat exchanger (151) is configured to enable heat exchange between the refrigerant and air outside the target temperature-controlled space;
a second outlet branch (111b), configured to connect the refrigerant outlet (11a) to the inner heat exchanger (131, 132) and/or the heat exchanger for the target temperature-controlled device, wherein the inner heat exchanger (131, 132) is configured to enable heat exchange between the refrigerant and air in the target temperature-controlled space, and the heat exchanger for the target temperature-controlled device is configured to enable heat exchange between the refrigerant and the heat exchange working medium for adjusting the temperature of the target temperature-controlled device;
a first inlet branch (112a), configured to connect the refrigerant inlet (11b) to the inner heat exchanger (131, 132)) and/or the heat exchanger for the target temperature-controlled device; and
a second inlet branch (112b), configured to connect the refrigerant inlet (11b) to the low pressure chiller (16) and/or the outer heat exchanger (151), wherein
the first outlet branch (111a), the second outlet branch (111b), the first inlet branch (112a), and the second inlet branch (112b) respectively have a first stop valve, a second stop valve, a third stop valve, and a fourth stop valve for controlling opening and closing of the branch; and
when a temperature of the target temperature-controlled device is less than a first preset value, the target temperature-controlled device is heated by the heat absorbed by the refrigerant from the motor coolant through evaporation.

13. The method for controlling a thermal management system according to claim 12, wherein
the thermal management system further comprises a heat exchange circulation loop (30) for the target temperature-controlled device, the heat exchange circulation loop (30) for the target temperature-controlled device and the refrigerant loop (10) jointly comprise a heat exchanger for the target temperature-controlled device, and the heat exchanger for the target temperature-controlled device is configured to enable heat exchange between the refrigerant and a heat exchange working medium in the heat exchange circulation loop for the target temperature-controlled device;
the motor coolant is the same as the heat exchange working medium in the heat exchange circulation loop (30) for the target temperature-controlled device;
the motor coolant loop (50) and the heat exchange circulation loop (30) for the target temperature-controlled device jointly comprise a 4-way valve, and the 4-way valve is configured to switch the motor coolant loop (50) and the heat exchange circulation loop (30) for the target temperature-controlled device between a series connection state and a mutual independence state; and
when a difference between a motor outlet coolant temperature and the temperature of the target temperature-controlled device is greater than a first preset difference, the 4-way valve is controlled to connect the motor coolant loop (50) in series to the heat exchange circulation loop (30) for the target temperature-controlled device, so that the target temperature-controlled device is heated by heat from the motor coolant, wherein the motor outlet coolant temperature is a temperature of the motor coolant when the motor coolant flows out of the motor side.

14. The method for controlling a thermal management system according to claim 12, wherein
the thermal management system further comprises a heat exchange circulation loop (30) for the target temperature-controlled device, the heat exchange circulation loop (30) for the target temperature-controlled device and the refrigerant loop (10) jointly comprise a heat exchanger for the target temperature-controlled device, and the heat exchanger for the target temperature-controlled device is configured to enable heat exchange between the refrigerant and a heat exchange working medium in the heat exchange circulation loop for the target temperature-controlled device;
the motor coolant is the same as the heat exchange working medium in the heat exchange circulation loop for the target temperature-controlled device;
the motor coolant loop (50) and the heat exchange circulation loop (30) for the target temperature-controlled device jointly comprise a 4-way valve, and the 4-way valve is configured to switch the motor coolant loop (50) and the heat exchange circulation loop (30) for the target temperature-controlled device between a series connection state and a mutual independence state;
the motor coolant loop (50) comprises a radiator (152), and the radiator (152) is configured to dissipate the heat from the motor coolant to ambient air; and
when a difference between the temperature of the target temperature-controlled device and an ambient temperature is greater than a second preset difference, the 4-way valve is controlled to connect the motor coolant loop (50) in series to the heat exchange circulation loop for the target temperature-controlled device, so that the motor coolant absorbs heat from the target temperature-controlled device to cool the target temperature-controlled device, and the heat absorbed by the motor coolant is dissipated to the ambient air in the radiator.

## Patentansprüche

1. Wärmeverwaltungssystem (100), das auf Erwärmen durch einen Motor basiert, umfassend:
einen Kältemittelkreislauf (10) und einen Motorkühlmittelkreislauf (50), wobei
der Kältemittelkreislauf (10) und der Motorkühlmittelkreislauf (50) gemeinsam einen Niederdruckkühler (16) umfassen und der Niederdruckkühler (16) dazu konfiguriert ist, es einem Kältemittel in dem Kältemittelkreislauf (10) zu ermöglichen, Wärme aus einem Motorkühlmittel in dem Motorkühlmittelkreislauf (50) durch Verdampfung zu absorbieren, um einen temperaturgesteuerten Zielraum und/oder eine temperaturgesteuerte Zielvorrichtung zu erwärmen,
**dadurch gekennzeichnet, dass**
der Kältemittelkreislauf (10) Folgendes umfasst:
einen Verdichter (11), der einen Kältemittelauslass (11a) und einen Kältemitteleinlass (11b) aufweist;
einen ersten Auslasszweig (111a), der dazu konfiguriert ist, den Kältemittelauslass (11a) mit dem Niederdruckkühler (16) und/oder dem äußeren Wärmetauscher (151) zu verbinden, wobei der äußere Wärmetauscher (151) dazu konfiguriert ist, einen Wärmeaustausch zwischen dem Kältemittel und der Luft außerhalb des temperaturgesteuerten Zielraums zu ermöglichen;
einen zweiten Auslasszweig (111b), der dazu konfiguriert ist, den Kältemittelauslass (11a) mit dem inneren Wärmetauscher (131, 132) und/oder dem Wärmetauscher für die temperaturgesteuerte Zielvorrichtung zu verbinden, wobei der innere Wärmetauscher (131, 132) dazu konfiguriert ist, einen Wärmeaustausch zwischen dem Kältemittel und der Luft in dem temperaturgesteuerten Zielraum zu ermöglichen, und der Wärmetauscher für die temperaturgesteuerte Zielvorrichtung dazu konfiguriert ist, einen Wärmeaustausch zwischen dem Kältemittel und dem Wärmeaustauscharbeitsmedium zum Einstellen der Temperatur der temperaturgesteuerten Zielvorrichtung zu ermöglichen;
einen ersten Einlasszweig (112a), der dazu konfiguriert ist, den Kältemitteleinlass (11b) mit dem inneren Wärmetauscher (131, 132) und/oder dem Wärmetauscher für die temperaturgesteuerte Zielvorrichtung zu verbinden; und
einen zweiten Einlasszweig (112b), der dazu konfiguriert ist, den Kältemitteleinlass (11b) mit dem Niederdruckkühler (16) und/oder dem äußeren Wärmetauscher (151) zu verbinden, wobei der erste Auslasszweig (111a), der zweite Auslasszweig (111b), der erste Einlasszweig (112a) und der zweite Einlasszweig (112b) jeweils ein erstes Absperrventil, ein zweites Absperrventil, ein drittes Absperrventil und ein viertes Absperrventil zum Steuern des Öffnens und Schließens des Zweiges aufweisen.

2. Wärmeverwaltungssystem nach Anspruch 1, wobei
der Kältemittelkreislauf (10) ferner Folgendes umfasst:
einen äußeren Wärmetauscher (151), der dazu konfiguriert ist, einen Wärmeaustausch zwischen dem Kältemittel und der Luft außerhalb des temperaturgesteuerten Zielraums zu ermöglichen, und der parallel mit dem Niederdruckkühler (16) verbunden ist; und
ein 3-Wege-Ventil, das dazu konfiguriert ist, ein Kältemittelströmungsverhältnis zwischen dem Niederdruckkühler (16) und dem äußeren Wärmetauscher (151) einzustellen.

3. Wärmeverwaltungssystem nach Anspruch 2, wobei
das 3-Wege-Ventil Folgendes umfasst:
ein erstes elektronisches Expansionsventil, das in Reihe mit dem Niederdruckkühler (16) verbunden und dazu konfiguriert ist, eine Kältemittelströmungsrate des Niederdruckkühlers (16) einzustellen; und
ein zweites elektronisches Expansionsventil, das in Reihe mit dem äußeren Wärmetauscher (151) verbunden und dazu konfiguriert ist, eine Kältemittelströmungsrate des äußeren Wärmetauschers (151) einzustellen.

4. Wärmeverwaltungssystem nach Anspruch 3, wobei
der Kältemittelkreislauf (10) ferner Folgendes umfasst:
einen Wärmetauscher für die temperaturgesteuerte Zielvorrichtung, der dazu konfiguriert ist, einen Wärmeaustausch zwischen dem Kältemittel und einem Wärmeaustauscharbeitsmedium zum Einstellen einer Temperatur der temperaturgesteuerten Zielvorrichtung zu ermöglichen;
einen inneren Wärmetauscher, der dazu konfiguriert ist, einen Wärmeaustausch zwischen dem Kältemittel und der Luft in dem temperaturgesteuerten Zielraum zu ermöglichen;
ein drittes elektronisches Expansionsventil, das in Reihe mit dem Wärmetauscher für die temperaturgesteuerte Zielvorrichtung verbunden und dazu konfiguriert ist, eine Kältemittelströmungsrate des Wärmetauschers für die temperaturgesteuerte Zielvorrichtung zu steuern; und
ein viertes elektronisches Expansionsventil, das in Reihe mit dem inneren Wärmetauscher verbunden und dazu konfiguriert ist, eine Kältemittelströmungsrate des inneren Wärmetauschers zu steuern.

5. Wärmeverwaltungssystem nach Anspruch 4, wobei das erste elektronische Expansionsventil, das zweite elektronische Expansionsventil, das dritte elektronische Expansionsventil und das vierte elektronische Expansionsventil integriert sind.

6. Wärmeverwaltungssystem nach Anspruch 1, wobei das erste Absperrventil, das zweite Absperrventil, das dritte Absperrventil und das vierte Absperrventil integriert sind.

7. Wärmeverwaltungssystem nach einem der Ansprüche 1 bis 6, ferner umfassend:
einen Wärmeaustauschzirkulationskreislauf (30) für die temperaturgesteuerte Zielvorrichtung, wobei der Wärmeaustauschzirkulationskreislauf (30) für die temperaturgesteuerte Zielvorrichtung und der Kältemittelkreislauf (10) gemeinsam den Wärmetauscher für die temperaturgesteuerte Zielvorrichtung umfassen und der Wärmetauscher für die temperaturgesteuerte Zielvorrichtung dazu konfiguriert ist, einen Wärmeaustausch zwischen dem Kältemittel und einem Wärmeaustauscharbeitsmedium in dem Wärmeaustauschzirkulationskreislauf für die temperaturgesteuerte Zielvorrichtung zu ermöglichen.

8. Wärmeverwaltungssystem nach Anspruch 7, wobei
das Motorkühlmittel das gleiche ist wie das Wärmeaustauscharbeitsmedium in dem Wärmeaustauschzirkulationskreislauf (30) für die temperaturgesteuerte Zielvorrichtung; und
der Motorkühlmittelkreislauf (50) und der Wärmeaustauschzirkulationskreislauf (30) für die temperaturgesteuerte Zielvorrichtung gemeinsam ein 4-Wege-Ventil umfassen und das 4-Wege-Ventil dazu konfiguriert ist, den Motorkühlmittelkreislauf (50) und den Wärmeaustauschzirkulationskreislauf (30) für die temperaturgesteuerte Zielvorrichtung zwischen einem Reihenverbindungszustand und einem gegenseitigen Unabhängigkeitszustand umzuschalten.

9. Wärmeverwaltungssystem nach Anspruch 9, wobei der Motorkühlmittelkreislauf (50) einen Kühler (152) umfasst und der Kühler (152) dazu konfiguriert ist, Wärme aus dem Motorkühlmittel an die Luft außerhalb des temperaturgesteuerten Zielraums abzuführen.

10. Wärmeverwaltungssystem nach einem der Ansprüche 1 bis 10, wobei das Wärmeverwaltungssystem auf ein Elektrofahrzeug angewendet wird, der temperaturgesteuerte Zielraum ein Fahrgastraum ist und die temperaturgesteuerte Zielvorrichtung eine Batterie ist.

11. Elektrofahrzeug, umfassend das Wärmeverwaltungssystem nach einem der Ansprüche 1 bis 10.

12. Verfahren zum Steuern eines Wärmeverwaltungssystems (100), wobei das Wärmeverwaltungssystem einen Kältemittelkreislauf (10) und einen Motorkühlmittelkreislauf (50) umfasst;
der Kältemittelkreislauf (10) und der Motorkühlmittelkreislauf (50) gemeinsam einen Niederdruckkühler (16) umfassen und der Niederdruckkühler (16) dazu konfiguriert ist, es einem Kältemittel in dem Kältemittelkreislauf (10) zu ermöglichen, Wärme aus einem Motorkühlmittel in dem Motorkühlmittelkreislauf (50) durch Verdampfung zu absorbieren, um eine temperaturgesteuerte Zielvorrichtung zu erwärmen, **dadurch gekennzeichnet, dass** der Kältemittelkreislauf (10) Folgendes umfasst:
einen Verdichter (11), der einen Kältemittelauslass (11a) und einen Kältemitteleinlass (11b) aufweist;
einen ersten Auslasszweig (111a), der dazu konfiguriert ist, den Kältemittelauslass (11a) mit dem Niederdruckkühler (16) und/oder dem äußeren Wärmetauscher (151) zu verbinden, wobei der äußere Wärmetauscher (151) dazu konfiguriert ist, einen Wärmeaustausch zwischen dem Kältemittel und der Luft außerhalb des temperaturgesteuerten Zielraums zu ermöglichen;
einen zweiten Auslasszweig (111b), der dazu konfiguriert ist, den Kältemittelauslass (11a) mit dem inneren Wärmetauscher (131, 132) und/oder dem Wärmetauscher für die temperaturgesteuerte Zielvorrichtung zu verbinden, wobei der innere Wärmetauscher (131, 132) dazu konfiguriert ist, einen Wärmeaustausch zwischen dem Kältemittel und der Luft in dem temperaturgesteuerten Zielraum zu ermöglichen, und der Wärmetauscher für die temperaturgesteuerte Zielvorrichtung dazu konfiguriert ist, einen Wärmeaustausch zwischen dem Kältemittel und dem Wärmeaustauscharbeitsmedium zum Einstellen der Temperatur der temperaturgesteuerten Zielvorrichtung zu ermöglichen;
einen ersten Einlasszweig (112a), der dazu konfiguriert ist, den Kältemitteleinlass (11b) mit dem inneren Wärmetauscher (131, 132) und/oder dem Wärmetauscher für die temperaturgesteuerte Zielvorrichtung zu verbinden; und
einen zweiten Einlasszweig (112b), der dazu konfiguriert ist, den Kältemitteleinlass (11b) mit dem Niederdruckkühler (16) und/oder dem äußeren Wärmetauscher (151) zu verbinden, wobei der erste Auslasszweig (111a), der zweite Auslasszweig (111b), der erste Einlasszweig (112a) und der zweite Einlasszweig (112b) jeweils ein erstes Absperrventil, ein zweites Absperrventil, ein drittes Absperrventil und ein viertes Absperrventil zum Steuern des Öffnens und Schließens des Zweiges aufweisen; und,
wenn eine Temperatur der temperaturgesteuerten Zielvorrichtung geringer als ein erster zuvor festgelegter Wert ist, die temperaturgesteuerte Zielvorrichtung durch die Wärme erwärmt wird, die durch das Kältemittel aus dem Motorkühlmittel durch Verdampfung absorbiert wird.

13. Verfahren zum Steuern eines Wärmeverwaltungssystems nach Anspruch 12, wobei
das Wärmeverwaltungssystem ferner einen Wärmeaustauschzirkulationskreislauf (30) für die temperaturgesteuerte Zielvorrichtung umfasst, der Wärmeaustauschzirkulationskreislauf (30) für die temperaturgesteuerte Zielvorrichtung und der Kältemittelkreislauf (10) gemeinsam einen Wärmetauscher für die temperaturgesteuerte Zielvorrichtung umfassen und der Wärmetauscher für die temperaturgesteuerte Zielvorrichtung dazu konfiguriert ist, einen Wärmeaustausch zwischen dem Kältemittel und einem Wärmeaustauscharbeitsmedium in dem Wärmeaustauschzirkulationskreislauf für die temperaturgesteuerte Zielvorrichtung zu ermöglichen;
das Motorkühlmittel das gleiche ist wie das Wärmeaustauscharbeitsmedium in dem Wärmeaustauschzirkulationskreislauf (30) für die temperaturgesteuerte Zielvorrichtung;
der Motorkühlmittelkreislauf (50) und der Wärmeaustauschzirkulationskreislauf (30) für die temperaturgesteuerte Zielvorrichtung gemeinsam ein 4-Wege-Ventil umfassen und das 4-Wege-Ventil dazu konfiguriert ist, den Motorkühlmittelkreislauf (50) und den Wärmeaustauschzirkulationskreislauf (30) für die temperaturgesteuerte Zielvorrichtung zwischen einem Reihenverbindungszustand und einem gegenseitigen Unabhängigkeitszustand umzuschalten; und,
wenn eine Differenz zwischen einer Kühlmitteltemperatur am Motorauslass und der Temperatur der temperaturgesteuerten Zielvorrichtung größer als eine erste zuvor festgelegte Differenz ist, das 4-Wege-Ventil dahingehend gesteuert wird, den Motorkühlmittelkreislauf (50) in Reihe mit dem Wärmeaustauschzirkulationskreislauf (30) für die temperaturgesteuerte Zielvorrichtung zu verbinden, sodass die temperaturgesteuerte Zielvorrichtung durch Wärme aus dem Motorkühlmittel erwärmt wird, wobei die Kühlmitteltemperatur am Motorauslass eine Temperatur des Motorkühlmittels ist, wenn das Motorkühlmittel aus der Motorseite herausströmt.

14. Verfahren zum Steuern eines Wärmeverwaltungssystems nach Anspruch 12, wobei
das Wärmeverwaltungssystem ferner einen Wärmeaustauschzirkulationskreislauf (30) für die temperaturgesteuerte Zielvorrichtung umfasst, der Wärmeaustauschzirkulationskreislauf (30) für die temperaturgesteuerte Zielvorrichtung und der Kältemittelkreislauf (10) gemeinsam einen Wärmetauscher für die temperaturgesteuerte Zielvorrichtung umfassen und der Wärmetauscher für die temperaturgesteuerte Zielvorrichtung dazu konfiguriert ist, einen Wärmeaustausch zwischen dem Kältemittel und einem Wärmeaustauscharbeitsmedium in dem Wärmeaustauschzirkulationskreislauf für die temperaturgesteuerte Zielvorrichtung zu ermöglichen;
das Motorkühlmittel das gleiche ist wie das Wärmeaustauscharbeitsmedium in dem Wärmeaustauschzirkulationskreislauf für die temperaturgesteuerte Zielvorrichtung;
der Motorkühlmittelkreislauf (50) und der Wärmeaustauschzirkulationskreislauf (30) für die temperaturgesteuerte Zielvorrichtung gemeinsam ein 4-Wege-Ventil umfassen und das 4-Wege-Ventil dazu konfiguriert ist, den Motorkühlmittelkreislauf (50) und den Wärmeaustauschzirkulationskreislauf (30) für die temperaturgesteuerte Zielvorrichtung zwischen einem Reihenverbindungszustand und einem gegenseitigen Unabhängigkeitszustand umzuschalten;
der Motorkühlmittelkreislauf (50) einen Kühler (152) umfasst und der Kühler (152) dazu konfiguriert ist, die Wärme aus dem Motorkühlmittel an die Umgebungsluft abzuführen; und,
wenn eine Differenz zwischen der Temperatur der temperaturgesteuerten Zielvorrichtung und einer Umgebungstemperatur größer als eine zweite zuvor festgelegte Differenz ist, das 4-Wege-Ventil dahingehend gesteuert wird, den Motorkühlmittelkreislauf (50) in Reihe mit dem Wärmeaustauschzirkulationskreislauf für die temperaturgesteuerte Zielvorrichtung zu verbinden, sodass das Motorkühlmittel Wärme aus der temperaturgesteuerten Zielvorrichtung absorbiert, um die temperaturgesteuerte Zielvorrichtung zu kühlen, und die durch das Motorkühlmittel absorbierte Wärme an die Umgebungsluft in dem Kühler abgeführt wird.

## Revendications

1. Système de gestion thermique (100) basé sur le chauffage par un moteur, comprenant :
une boucle de fluide frigorigène (10) et une boucle de liquide de refroidissement de moteur (50), dans lequel
la boucle de fluide frigorigène (10) et la boucle de liquide de refroidissement de moteur (50) comprennent conjointement un refroidisseur basse pression (16), et le refroidisseur basse pression (16) est configuré pour permettre à un fluide frigorigène dans la boucle de fluide frigorigène (10) d'absorber la chaleur d'un liquide de refroidissement de moteur dans la boucle de liquide de refroidissement de moteur (50) par évaporation, afin de chauffer un espace à température contrôlée cible et/ou un dispositif à température contrôlée cible,
**caractérisé en ce que**
la boucle de fluide frigorigène (10) comprend :
un compresseur (11) qui a une sortie de fluide frigorigène (11à) et une entrée de fluide frigorigène (11b) ;
une première branche de sortie (111a), configurée pour relier la sortie de fluide frigorigène (11a) au refroidisseur basse pression (16) et/ou à l'échangeur de chaleur externe (151), dans lequel l'échangeur de chaleur externe (151) est configuré pour permettre un échange de chaleur entre le fluide frigorigène et l'air à l'extérieur de l'espace à température contrôlée cible ;
une seconde branche de sortie (111b), configurée pour relier la sortie de fluide frigorigène (11à) à l'échangeur de chaleur interne (131, 132) et/ou à l'échangeur de chaleur pour le dispositif à température contrôlée cible, dans lequel l'échangeur de chaleur interne (131, 132) est configuré pour permettre un échange de chaleur entre le fluide frigorigène et l'air dans l'espace à température contrôlée cible, et l'échangeur de chaleur pour le dispositif à température contrôlée cible est configuré pour permettre un échange de chaleur entre le fluide frigorigène et le milieu de travail d'échange de chaleur pour ajuster la température du dispositif à température contrôlée cible ;
une première branche d'entrée (112a), configurée pour relier l'entrée de fluide frigorigène (11b) à l'échangeur de chaleur interne (131, 132) et/ou à l'échangeur de chaleur pour le dispositif à température contrôlée cible ; et
une seconde branche d'entrée (112b), configurée pour relier l'entrée de fluide frigorigène (11b) au refroidisseur basse pression (16) et/ou à l'échangeur de chaleur externe (151), dans lequel
la première branche de sortie (111a), la seconde branche de sortie (111b), la première branche d'entrée (112a) et la seconde branche d'entrée (112b) ont respectivement une première soupape d'arrêt, une deuxième soupape d'arrêt, une troisième soupape d'arrêt, et une quatrième soupape d'arrêt pour commander l'ouverture et la fermeture de la branche.

2. Système de gestion thermique selon la revendication 1, dans lequel
la boucle de fluide frigorigène (10) comprend également :
un échangeur de chaleur externe (151), configuré pour permettre un échange de chaleur entre le fluide frigorigène et l'air à l'extérieur de l'espace à température contrôlée cible, et relié en parallèle au refroidisseur basse pression (16) ; et
une soupape à 3 voies, configurée pour ajuster un débit de fluide frigorigène entre le refroidisseur basse pression (16) et l'échangeur de chaleur externe (151).

3. Système de gestion thermique selon la revendication 2, dans lequel
la soupape à 3 voies comprend :
un premier détendeur électronique, relié en série au refroidisseur basse pression (16), et configuré pour ajuster un débit de fluide frigorigène du refroidisseur basse pression (16) ; et
un deuxième détendeur électronique, relié en série à l'échangeur de chaleur externe (151), et configuré pour ajuster un débit de fluide frigorigène de l'échangeur de chaleur externe (151).

4. Système de gestion thermique selon la revendication 3, dans lequel
la boucle de fluide frigorigène (10) comprend également :
un échangeur de chaleur pour le dispositif à température contrôlée cible, configuré pour permettre un échange de chaleur entre le fluide frigorigène et un milieu de travail d'échange de chaleur pour ajuster une température du dispositif à température contrôlée cible ;
un échangeur de chaleur interne, configuré pour permettre un échange de chaleur entre le fluide frigorigène et l'air dans l'espace à température contrôlée cible ;
un troisième détendeur électronique, relié en série à l'échangeur de chaleur pour le dispositif à température contrôlée cible, et configuré pour commander un débit de fluide frigorigène pour l'échangeur de chaleur du dispositif à température contrôlée cible ; et
un quatrième détendeur électronique, relié en série à l'échangeur de chaleur interne, et configuré pour commander un débit de fluide frigorigène de l'échangeur de chaleur interne.

5. Système de gestion thermique selon la revendication 4, dans lequel le premier détendeur électronique, le deuxième détendeur électronique, le troisième détendeur électronique et le quatrième détendeur électronique sont intégrés.

6. Système de gestion thermique selon la revendication 1, dans lequel la première soupape d'arrêt, la deuxième soupape d'arrêt, la troisième soupape d'arrêt et la quatrième soupape d'arrêt sont intégrées.

7. Système de gestion thermique selon l'une quelconque des revendications 1 à 6, comprenant également :
une boucle de circulation d'échange de chaleur (30) pour le dispositif à température contrôlée cible, dans lequel la boucle de circulation d'échange de chaleur (30) pour le dispositif à température contrôlée cible et la boucle de fluide frigorigène (10) comprennent conjointement l'échangeur de chaleur pour le dispositif à température contrôlée cible, et l'échangeur de chaleur pour le dispositif à température contrôlée cible est configuré pour permettre un échange de chaleur entre le fluide frigorigène et un milieu de travail d'échange de chaleur dans la boucle de circulation d'échange de chaleur pour le dispositif à température contrôlée cible.

8. Système de gestion thermique selon la revendication 7, dans lequel
le liquide de refroidissement de moteur est le même que le milieu de travail d'échange de chaleur dans la boucle de circulation d'échange de chaleur (30) pour le dispositif à température contrôlée cible ; et
la boucle de liquide de refroidissement de moteur (50) et la boucle de circulation d'échange de chaleur (30) pour le dispositif à température contrôlée cible comprennent conjointement une soupape à 4 voies, et la soupape à 4 voies est configurée pour commuter la boucle de liquide de refroidissement de moteur (50) et la boucle de circulation d'échange de chaleur (30) pour le dispositif à température contrôlée cible entre un état de liaison en série et un état d'indépendance mutuelle.

9. Système de gestion thermique selon la revendication 9, dans lequel la boucle de liquide de refroidissement de moteur (50) comprend un radiateur (152), et le radiateur (152) est configuré pour dissiper la chaleur du liquide de refroidissement de moteur vers l'air à l'extérieur de l'espace à température contrôlée cible.

10. Système de gestion thermique selon l'une quelconque des revendications 1 à 10, dans lequel le système de gestion thermique est appliqué à un véhicule électrique, l'espace à température contrôlée cible est un habitacle, et le dispositif à température contrôlée cible est une batterie.

11. Véhicule électrique, comprenant le système de gestion thermique selon l'une quelconque des revendications 1 à 10.

12. Procédé de commande d'un système de gestion thermique (100), dans lequel le système de gestion thermique comprend une boucle de fluide frigorigène (10) et une boucle de liquide de refroidissement de moteur (50) ;
la boucle de fluide frigorigène (10) et la boucle de liquide de refroidissement de moteur (50) comprennent conjointement un refroidisseur basse pression (16), et le refroidisseur basse pression (16) est configuré pour permettre à un fluide frigorigène dans la boucle de fluide frigorigène (10) d'absorber la chaleur d'un liquide de refroidissement de moteur dans la boucle de liquide de refroidissement de moteur (50) par évaporation, afin de chauffer un dispositif à température contrôlée cible, **caractérisé en ce que** la boucle de fluide frigorigène (10) comprend :
un compresseur (11) qui a une sortie de fluide frigorigène (11à) et une entrée de fluide frigorigène (11b) ;
une première branche de sortie (111a), configurée pour relier la sortie de fluide frigorigène (11a) au refroidisseur basse pression (16) et/ou à l'échangeur de chaleur externe (151), dans lequel l'échangeur de chaleur externe (151) est configuré pour permettre un échange de chaleur entre le fluide frigorigène et l'air à l'extérieur de l'espace à température contrôlée cible ;
une seconde branche de sortie (111b), configurée pour relier la sortie de fluide frigorigène (11à) à l'échangeur de chaleur interne (131, 132) et/ou à l'échangeur de chaleur pour le dispositif à température contrôlée cible, dans lequel l'échangeur de chaleur interne (131, 132) est configuré pour permettre un échange de chaleur entre le fluide frigorigène et l'air dans l'espace à température contrôlée cible, et l'échangeur de chaleur pour le dispositif à température contrôlée cible est configuré pour permettre un échange de chaleur entre le fluide frigorigène et le milieu de travail d'échange de chaleur pour ajuster la température du dispositif à température contrôlée cible ;
une première branche d'entrée (112a), configurée pour relier l'entrée de fluide frigorigène (11b) à l'échangeur de chaleur interne (131, 132) et/ou à l'échangeur de chaleur pour le dispositif à température contrôlée cible ; et
une seconde branche d'entrée (112b), configurée pour relier l'entrée de fluide frigorigène (11b) au refroidisseur basse pression (16) et/ou à l'échangeur de chaleur externe (151), dans lequel
la première branche de sortie (111a), la seconde branche de sortie (111b), la première branche d'entrée (112a) et la seconde branche d'entrée (112b) ont respectivement une première soupape d'arrêt, une deuxième soupape d'arrêt, une troisième soupape d'arrêt et une quatrième soupape d'arrêt pour commander l'ouverture et la fermeture de la branche ; et
lorsqu'une température du dispositif à température contrôlée cible est inférieure à une première valeur prédéfinie, le dispositif à température contrôlée cible est chauffé par la chaleur absorbée par le fluide frigorigène du liquide de refroidissement de moteur par évaporation.

13. Procédé de commande d'un système de gestion thermique selon la revendication 12, dans lequel
le système de gestion thermique comprend également une boucle de circulation d'échange de chaleur (30) pour le dispositif à température contrôlée cible, la boucle de circulation d'échange de chaleur (30) pour le dispositif à température contrôlée cible et la boucle de fluide frigorigène (10) comprennent conjointement un échangeur de chaleur pour le dispositif à température contrôlée cible, et l'échangeur de chaleur pour le dispositif à température contrôlée cible est configuré pour permettre un échange de chaleur entre le fluide frigorigène et un milieu de travail d'échange de chaleur dans la boucle de circulation d'échange de chaleur pour le dispositif à température contrôlée cible ;
le liquide de refroidissement de moteur est le même que le milieu de travail d'échange de chaleur dans la boucle de circulation d'échange de chaleur (30) pour le dispositif à température contrôlée cible ;
la boucle de liquide de refroidissement de moteur (50) et la boucle de circulation d'échange de chaleur (30) pour le dispositif à température contrôlée cible comprennent conjointement une soupape à 4 voies, et la soupape à 4 voies est configurée pour commuter la boucle de liquide de refroidissement de moteur (50) et la boucle de circulation d'échange de chaleur (30) pour le dispositif à température contrôlée cible entre un état de liaison en série et un état d'indépendance mutuelle ; et
lorsqu'une différence entre une température de liquide de refroidissement de sortie de moteur et la température du dispositif à température contrôlée cible est supérieure à une première différence prédéfinie, la soupape à 4 voies est commandée pour relier la boucle de liquide de refroidissement de moteur (50) en série à la boucle de circulation d'échange de chaleur (30) pour le dispositif à température contrôlée cible, de sorte que le dispositif à température contrôlée cible soit chauffé par la chaleur du liquide de refroidissement de moteur, dans lequel la température de liquide de refroidissement de sortie de moteur est une température du liquide de refroidissement de moteur lorsque le liquide de refroidissement de moteur s'écoule hors du côté moteur.

14. Procédé de commande d'un système de gestion thermique selon la revendication 12, dans lequel
le système de gestion thermique comprend également une boucle de circulation d'échange de chaleur (30) pour le dispositif à température contrôlée cible, la boucle de circulation d'échange de chaleur (30) pour le dispositif à température contrôlée cible et la boucle de fluide frigorigène (10) comprennent conjointement un échangeur de chaleur pour le dispositif à température contrôlée cible, et l'échangeur de chaleur pour le dispositif à température contrôlée cible est configuré pour permettre un échange de chaleur entre le fluide frigorigène et un milieu de travail d'échange de chaleur dans la boucle de circulation d'échange de chaleur pour le dispositif à température contrôlée cible ;
le liquide de refroidissement de moteur est le même que le milieu de travail d'échange de chaleur dans la boucle de circulation d'échange de chaleur pour le dispositif à température contrôlée cible ;
la boucle de liquide de refroidissement de moteur (50) et la boucle de circulation d'échange de chaleur (30) pour le dispositif à température contrôlée cible comprennent conjointement une soupape à 4 voies, et la soupape à 4 voies est configurée pour commuter la boucle de liquide de refroidissement de moteur (50) et la boucle de circulation d'échange de chaleur (30) pour le dispositif à température contrôlée cible entre un état de liaison en série et un état d'indépendance mutuelle ;
la boucle de liquide de refroidissement de moteur (50) comprend un radiateur (152), et le radiateur (152) est configuré pour dissiper la chaleur du liquide de refroidissement de moteur vers l'air ambiant ; et
lorsqu'une différence entre la température du dispositif à température contrôlée cible et une température ambiante est supérieure à une seconde différence prédéfinie, la soupape à 4 voies est commandée pour relier la boucle de liquide de refroidissement de moteur (50) en série à la boucle de circulation d'échange de chaleur pour le dispositif à température contrôlée cible, de sorte que le liquide de refroidissement de moteur absorbe la chaleur du dispositif à température contrôlée cible pour refroidir le dispositif à température contrôlée cible, et la chaleur absorbée par le liquide de refroidissement de moteur est dissipée dans l'air ambiant dans le radiateur.
